Europäisches Patentamt

European Patent Office

Office européen des brevets

(19)

(11) Veröffentlichungsnummer: **0 001 048**
**B1**

(12) **EUROPÄISCHE PATENTSCHRIFT**

(21) Anmeldenummer: **78100593.9**

(22) Anmeldetag: **03.08.78**

(51) Int. Cl.³: **F 24 F 3/16**

(54) Verfahren und Einrichtung zum Desinfizieren des Operationsraums eines Krankenhauses

(30) Priorität: **09.09.77 DE 2740738**

(43) Veröffentlichungstag der Anmeldung:
**21.03.79 Patentblatt 79/06**

(45) Bekanntmachung des Hinweises auf die Patenterteilung:
**10.12.80 Patentblatt 80/25**

(84) Benannte Vertragsstaaten:
**BE CH DE FR GB LU NL SE**

(56) Entgegenhaltungen:
**DE - A - 2 308 012**
**FR - A - 2 191 908**
**US - A - 3 493 323**

(73) Patentinhaber: **Stierlen-Maquet Aktiengesellschaft**
**Kehler Strasse 31**
**D - 7550 Rastatt (DE)**

(72) Erfinder: **Sippel, Hans, Dipl.-Ing.**
**Werderstrasse 32**
**D - 7570 Baden-Baden (DE)**
**Junginger, Klaus M., Dr.-Ing.**
**Bastgartenstrasse 32**
**D - 7550 Rastatt 22 (DE)**

(74) Vertreter: **Schulz-Dörlam, Wolfgang, et al**
**Mauerkircherstrasse 31**
**D - 8000 München 80 (DE)**

EP 0 001 048 B1

Courier Press, Leamington Spa, England.

## Verfahren und Einrichtung zum Desinfizieren des Operationsraums eines Krankenhauses

Die Erfindung bezieht sich auf ein Verfahren zum Desinfizieren des mittels einer Klimaanlage klimatisierbaren Operationsraumes sowie ggf. mindestens eines weiteren mittels derselben Klimaanlage klimatisierbaren Raumes eines Krankenhauses, wobei die Klimaanlage mit der Umgebungsluft über je einen Außenluft- und Fortluftkanal sowie mit dem Operationsraum und ggf. dem weiteren Raum über einen Zuluft-und Abluftkanal in Verbindung steht, in den Zuluftkanal ein Ventilator, saugseitig ein Vorfilter und druckseitig ein weiteres Filter eingeschaltet sind, in den Abluftkanal ein Ventilator eingeschaltet ist und der Außenluftkanal und vorzugsweise auch der Fortluftkanal zur Umgebung hin mittels einer Absperrvorrichtung luftdicht abschließbar sind und wobei die Klimaanlage im geschlossenen Kreislauf mit den zu desinfizierenden Räumen betrieben und das Desinfektionsmittel in den Zuluftkanal stromab des weiteren Filters eingebracht wird. Weiter bezieht sich die Erfindung auf eine Einrichtung zur Durchführung dieses Verfahrens.

Ein Verfahren der vorstehend genannten Art ist bekannt aus der DE-A-23 08 012. Hierbei wird beim Desinfizieren mindestens ein Teil der Klimaanlage stillgelegt und gegen die Umgebung abgesperrt, der saugseitige Abschnitt des Abluftkanals wird über einen Beipaß mit einer stromab des weiteren Filters liegenden Stelle des Zuluftkanals verbunden, und das Desinfektionsmittel wird in den Beipaß eingebracht. Dabei kann der saugseitige Abschnitt des Zuluftkanals nicht desinfiziert werden, und es sind keine Maßnahmen getroffen, in den zu desinfizierenden Räumen für die Wirkung des Desinfektionsmittels günstige Temperatur- und Feuchtebedingungen zu schaffen.

Bei einem aus der US-A-3 493 323 bekannten Verfahren werden die Kanäle einer Klimaanlage für die Räume eines Krankenhauses dadurch desinfiziert, daß in sie das Desinfektionsmittel so eingesprüht wird, daß die Innenseiten der Kanäle mit flüssigem Desinfektionsmittel benetzt werden. In die Kanäle sind dabei keine Filter eingeschaltet, die andernfalls zumindest den flüssigen Anteil des Desinfektionsmittels zurückhalten würden, so daß stromab von ihnen keine wirksame Desinfektion mehr erfolgen könnte. Eine Desinfektion auch der an die Kanäle angeschlossenen Räume ist bei diesem Verfahren nicht beabsichtigt. Die Klimaanlage wird während des Desinfizierens nicht im geschlossenen Kreislauf betrieben.

Bei einem aus der FR-A-21 91 908 bekannten Verfahren wird zum Desinfizieren eines Schwebstoffilters, der in der Klimaanlage eines Krankenhauses vorgesehen ist, dessen Saugseite mit seiner Druckseite verbunden, und ein Desinfektionsmittel wird in den zur Verbindung vorgesehenen Beipaß eingebracht.

Rückstände des Desinfektionsmittels, die nach dem Desinfektionsvorgang im Filter verbleiben, werden aus der dem klimatisierten Raum zugeführten Luft mittels eines weiteren Filters entzogen. Eine Desinfektion des klimatisierten Raumes ist hierbei nicht möglich. Die Klimaanlage wird nicht unter Einbeziehung dieses Raumes beim Desinfektionsvorgang in einem Kreislauf betrieben.

Der Erfindung liegt die Aufgabe zugrunde, eine gleichzeitige Desinfizierung des Operationsraums sowie ggf. mittels derselben Klimaanlage klimatisierbarer weiterer Räume einerseits und der Kanäle der Klimaanlage andererseits in einfacher und sicherer Weise zu ermöglichen.

Die Aufgabe wird gemäß der Erfindung bei einem Verfahren der eingangs genannten Art dadurch gelöst, daß beim Desinfizieren der druckseitige Abschnitt des Abluftkanals mit einer stromauf des Vorfilters liegenden Stelle des Zuluftkanals verbunden wird und mittels der Klimaanlage die für die Wirkung des Desinfektionsmittels günstigsten Temperatur- und Feuchtebedingungen in den zu desinfizierenden Räumen aufrechterhalten werden.

Bei dem Verfahren gemäß der Erfindung wird durch den während des Desinfektionsvorganges gebildeten Kreislauf des mit dem Desinfektionsmittel beladenen Gasgemischs durch den Operationsraum und ggf. weitere Räume sowie durch die Kanäle der Klimaanlage eine gleichzeitige Desinfektion auch dieser Kanäle erzielt. Die zum Einbringen des Desinfek- tionsmittels und ggf. des Neutralisierungs- mittels verwendeten Geräte können in oder an der Klimaanlage und damit außerhalb der zu desinfizierenden Räume angeordnet werden, so daß sie im Falle ihres Versagens repariert werden können, ohne daß Personen in die das Desinfektionsmittel enthaltenden Räume eindringen müßten. Nach Ablauf der Einwirkungsdauer ist die Klimaanlage sofort einsatzbereit, um eventuelle gasförmige oder ver- dampfbare Rückstände des Desinfektions- mittels aus den Räumen abzufördern, bevor diese wieder von Personen betreten werden. Während des Einbringens des Desinfektionsmittels und während dessen Einwirkungsdauer wird mittels der Klimaanlage die für die Wirksamkeit des Desinfektionsmittels günstigste Temperatur und Feuchte in den zu desinfizierenden Räumen aufrechterhalten.

Als Desinfektionsmittel kann in an sich bekannter Weise Formaldehyd verwendet werden, das sich also sehr wirksam erwiesen hat. Auch andere bakterizid wirkende Aldehyde können als Desinfektionsmittel zur Anwendung kommen. Diese müssen im allgemeinen in wäßriger Lösung versprüht werden. Nach Ende der Einwirkungsdauer kann dann das kondensierte Wasser durch Erhöhung der Zulufttemperatur und Verringerung der Feuchte der Zuluft abgeführt werden, wobei sich teilweise Rester des Aldehyds als Sumpf oder Trübe an nicht zu vermeidenden Senken der Kanäle der Klimaanlage sammeln, wodurch sich bei Aufbau der Kanäle aus Blechen Korrosionsprobleme ergeben könnten. Diese können jedoch durch Verwendung geeigneter Materialien, beispielsweise von Asbestzement, für die Kanäle vermieden werden. Zu einem großen Anteil können Aldehyde jedoch nach Ende der Einwirkungszeit physikalisch absorbiert werden, beispielsweise durch eine innerhalb der Klimaanlage erfolgende Wasserwäsche.

Zweckmäßig wird ein oberflächenaktives Desinfektionsmittel verwendet, das also nicht nur die Raumluft, sondern auch die Innenflächen des Raumes bzw. der Räume sowie die Oberflächen in dem Raum bzw. den Räumen befindlicher Gegenstände desinfiziert. Ein solches Desinfektionsmittel ist das bereits erwähnte Formaldehyd. Je nach Anwendungsfall kann es jedoch auch genügen, lediglich ein Raumdesinfektionsmittel zu verwenden, das nicht oberflächenaktiv ist. Als wirksames Raumdesinfektionsmittel ist insbesondere Triäthylenglykol verwendbar. Durch Zusätze kann jedoch auch in diesem Fall erforderlichenfalls eine zumindest teilweise Oberflächenaktivität erreicht werden.

Im allgemeinen wird man ein gegen alle Arten von Keimen wirksames Desinfektionsmittel verwenden. In Einzelfällen kann jedoch die Verwendung eines gegen bestimmte Keime wirksamen Mittels genügen. So kann beispielsweise als Desinfektionsmittel Äthylenglykol zum Einsatz kommen, das zwischen 10°C und 27°C bei 20% bis 60% rel. Feuchte gegen die Erreger von Scharlach, Masern sowie Hals- und Lungenentzündung wirksam ist.

Ein weiteres wirksames Desinfektionsmittel ist Äthylenoxid, das rein oder in Mischung mit Methylformat zur Anwendung kommen kann. Äthylenoxid ist im Handel in Sprühflaschen erhältlich, die Kohlendioxid oder Dichlordifluormethan als Treibmittel enthalten, und kann hierdurch in einfacher Weise in einen Kanal der Klimaanlage eingesprüht werden. Die günstigste Konzentration während der Einwirkungsdauer beträgt 1000 bis 1250 g/m³ des Rauminhalts der zu desinfizierenden Räume und der Kanäle der Klimaanlage, wobei die relative Feuchte 80% bis 90% betragen und die Temperatur bei 30°C liegen sollte.

Auch andere Desinfektionsmittel sind denkbar, beispielsweise mittels eines Ozonisators erzeugtes Ozon, Wasserstoffperoxid oder bei Konzentrationen von über 70% bakterizid wirkendes Äthanol.

Das Desinfektionsmittel wird in den Zuluftkanal der Klimaanlage stromab von deren Kühler eingebracht, um zu vermeiden, daß sich das Desinfektionsmittel an dem ggf. von einem vorhergehenden Regeleingriff noch kalten Kühler der Klimaanlage niederschlägt. Das Einbringen des Desinfektionsmittels erfolgt zweckmäßig in dampfförmigem Zustand oder in möglichst fein vernebelter Form.

In vielen Fällen ist es zweckmäßig, wenn während des Einbringens des Desinfektionsmittels zusätzlich ein Lösungsmittel für dieses eingebracht wird, da hierdurch der Niederschlag des Desinfektionsmittels auf den zu desinfizierenden Oberflächen beschleunigt und die Benetzung dieser Oberflächen verbessert werden kann. Im häufigsten Fall, wo das verwendete Desinfektionsmittel wasserlöslich ist, wird man während des Einbringens des Desinfektionsmittels die Feuchte erhöhen. Dies kann zumindest teilweise bereits dadurch erfolgen, daß eine wäßrige Lösung des Desinfektionsmittels eingebracht wird, wie dies bei Verwendung von Formalin der Fall ist, das eine 35— bis 40%-ige wäßrige Lösung von Formaldehyd darstellt. Ebenfalls und ggf. zusätzlich kann eine Erhöhung der Feuchte mittels des der Feuchteregelung dienenden Anlagenteils der Klimaanlage erfolgen. So wird zweckmäßig während des Einbringens von Formalin die relative Feuchte der Zuluft auf über 85% und vorzugsweise zwischen 90% und 95% gehalten.

Falls als Desinfektionsmittel Formalin verwendet wird, so enthält dieses zweckmäßig einen Stabilisierungszusatz, insbesondere Methanol. Andererseits kann Formaldehyd auch in anderer Weise dargestellt und eingebracht werden. So können seine Oligomere Trioxan oder Tetroxan durch Erhitzen zu Formaldehyd zersetzt werden, wobei Trioxan wegen dessen geringerer erforderlicher Zersetzungstemperatur der Vorzug gegeben wird. Ebenfalls kann Paraformaldehyd durch Erhitzen auf annähernd 200°C zu Formaldehyd depolymerisiert werden. Bei Verwendung eines Oligomeren oder Polymeren besteht gegenüber der Verwendung von Formalin der Vorteil, daß eine geringere Ausgangsmenge erforderlich ist, so daß die zum Einbringen des Desinfektionsmittels verwendeten Geräte kleiner gebaut werden können und einen geringeren Platzbedarf in oder an der Klimaanlage erfordern.

Das Desinfektionsmittel wird in die Kanäle der Klimaanlage so lange eingebracht, bis in den zu desinfizierenden Räumen die erforderliche Konzentration des Desinfektionsmittels herrscht. Diese Einbringzeit wird möglichst gering gehalten gegenüber der eforderlichen Einwirkzeit des Desinfektionsmittels. Während der Einwirkzeit werden, wie bereits er wähnt, die für die Wirkung des Desinfektionsmittels günstigsten Temperatur- und Feuchtebedingungen in den zu desinfizierenden Räumen mittels der Klimaanlage aufrechterhalten. So kann beispielsweise bei der Verwendung von Formaldehyd dieses bis zum Erreichen der Konzentration von annähernd 5 g je m³ Rauminhalt des Raumes bzw. der Räume und der Luftkanäle der Klimaanlage eingebracht werden, und danach kann während der Einwirkzeit die relative Feuchte über 75% und vorzugsweise zwischen 80% und 90% gehalten werden. Die Einwirkzeit beträgt dann annähernd 6 h. Verwendet man Triäthylenglykol als Desinfektionsmittel, so wird dieses bis zum Erreichen einer Konzentration von annähernd 6,7 mg je $m^3$ Rauminhalt eingebracht, und die Einwirkzeit beträgt annähernd 1 h.

Während des Einbringens des Desinfektionsmittels soll dieses nicht oder jedenfalls nicht in allzu großer Menge stromab der Stelle, an der es eingebracht wird, in den Kanälen der Klimaanlagen kondensieren. Daher ist es zweckmäßig, wenn während zumindest des anfänglichen und überwiegenden Teils der Dauer des Einbringens des Desinfektionsmittels das durch das Einbringen erzeugte Gasgemisch, ggf. durch Erhitzen stromauf der Stelle, an der das Desinfektionsmittel eingebracht wird, auf einer über dem Taupunkt liegenden Temperatur gehalten wird. Da eine relativ hohe Temperatur auch in den meisten Fällen für die Wirksamkeit des Desinfektionsmittels von Vorteil ist, kann sie relativ hoch bei mindestens 26°C und vorzugsweise 28°C bis 31°C gewählt werden. Die Klimaanlage muß selbstverständlich durch entsprechende Leistungsbemessung des in ihr vorgesehenen Erhitzers für einen Temperaturstellbereich ausgelegt werden, der die genannten Temperaturen umfaßt, während sonst Klimaanlagen für Operationssäle meist für einen Temperaturstellbereich von 21°C bis 24°C unter allen möglichen Umgebungsbedingungen ausgelegt werden.

Insbesondere bei der Verwendung von oberflächenaktiven Desinfektionsmitteln wie Formaldehyd ist es zweckmäßig, wenn vor dem Einbringen des Desinfektionsmittels der Raum bzw. die Räume, ggf. durch Kühlen mittels der Klimaanlage, auf einer Temperatur gehalten wird bzw. werden, die niedriger ist als der Taupunkt des während des Einbringens des Desinfektionsmittels aus der Klimaanlage in den Raum bzw. die Räume strömenden Gasgemischs. Hierdurch wird erreicht, daß während der Einbring- und Einwirkzeit das Desinfektionsmittel ggf. zusammen mit dem eingebrachten Lösungsmittel, insbesondere der erhöhten Feuchte, auf den zu desinfizierenden Oberflächen kondensiert und diese vollständig benetzt, wodurch der Desinfektionsvorgang beschleunigt wird.

Eine weitere günstige Ausgestaltung des Verfahrens besteht darin, daß während der Einwirkzeit die Konzentration des Desinfektionsmittels in dem Raum bzw. den Räumen und/oder in den Luftkanälen der Klimaanlage gemessen und erforderlichenfalls durch Zufuhr weiteren Desinfektionsmittels zumindest annähernd auf dem für dessen Wirksamkeit günstigsten Wert gehalten wird. Hierdurch kann die beim ursprünglichen Einbringen zu erreichende, seither für erforderlich gehaltene Konzentration auf geringere Werte herabgesetzt werden, da diese Konzentration seither im Hinblick darauf gewählt werden mußte, daß sie während der Einwirkzeit durch Kondensation und Bindung des Desinfektionsmittels verringert wurde. Beispielsweise kann bei der Verwendung von Triäthylenglykol die anfängliche Konzentration gegenüber dem obengenannten Wert von 6,7 mg je $m^3$ Rauminhalt um 20% herabgesetzt, dafür aber während der Einwirkzeit durch in Abständen erfolgende neuerliche Zufuhr des Desinfektionsmittels zumindest annähernd konstant gehalten werden. Auch bei der Verwendung von Formaldehyd ist eine ähnliche Regelung der Konzentration während der Einwirkzeit möglich, wobei man jedoch die Konzentration während der Einwirkzeit auf einem gegenüber der ursprünglichen Konzentration geringeren Wert halten wird im Hinblick darauf, daß nach Abbau der ursprünglich hohen Konzentration durch Kondensation bereits der zur Oberflächendesinfektion erforderliche Flüssigkeitsfilm gebildet ist und lediglich zur Desinfektion der Raumluft ein optimaler Konzentrationswert aufrechterhalten werden soll. Dieser liegt annähernd bei 50% der obengenannten, ursprünglich erforderlichen Konzentration.

Wird zur Durchführung des Verfahrens ein Desinfektionsmittel verwendet, das bei Mischung mit Luft explosibel ist, beispielsweise Äthylenoxid oder Äthanol, so ist eine weitere Ausgestaltung des Verfahrens zweckmäßig, die darin besteht, daß vor dem Einbringen des Desinfektionsmittels durch Einbringen eines gegenüber dem Desinfektionsmittel inerten Gases, vorzugweise Stickstoff oder Kohlendioxyd, der Sauerstoffgehalt der Raumluft unter denjenigen Wert abgesenkt wird, bei dem bei der nach dem Einbringen des Desinfektionsmittels herrschenden Konzentration des Desinfektionsmittels eine Explosionsmöglichkeit besteht.

Zur Vermeidung einer Keimübertragung sind Klimaanlagen für Operationssäle üblicherweise so ausgelegt, daß die Zuluftleistung die Abluftleistung überwiegt, so daß sich im Operationsraum ein Überdruck gegenüber der Umgebung einstellt. Bei Klimatisierung eines oder mehrerer zusätzlicher Räume, beispielsweise eines Vorbereitungsraumes, mittels derselben Klimaanlage, wird der Druck in dem zusätzlichen Raum bzw. in den zusätzlichen Räumen geringer als im Operationsraum, jedoch höher als in den wiederum hieran anschließenden Räumen und Fluren gewählt. Beim Einbringen des Desinfektionsmittels und während der Einwirkzeit kann die Klimaanlage weiterhin in dieser üblichen Weise betrieben werden, so daß im Operationsraum ein Überdruck herrscht. Hierdurch wird günstigerweise erreicht, daß das Desinfektionsmittel in ggf. vorhandene feine Ritzen und Spalte der Innenauskleidung und Maueröffnungen eindringt und auch hier angesiedelte Keime erreicht.

Den Operationsraum und ggf. die weiteren mittels derselben Klimaanlage klimatisierten Räume während des Desinfektionsvorganges unter Überdruck gegenüber der Umgebung zu halten, kann jedoch auch mit Nachteilen verbunden sein. Erstens müssen die Wandung des Operationsraumes und ggf. der weiteren Räume sowie die Verschlußvorrichtungen der Maueröffnungen (Fenster, Türen, Patientenschleusen) weitgehend gasdicht ausgebildet sein, um das Nachaußendringen des in den meisten Fällen auch für den Menschen toxischen Desinfektionsmittels auch unter den auftretenden Überdruckwerten zu gewährleisten, wozu ein entsprechender Bauaufwand erforderlich ist. Zweitens verbleibt das unter Überdruck in Ritzen und Spalten eingedrungene Desinfektionsmittel nach Beendigung des Desinfektionsvorganges teilweise in diesen und diffundiert aus ihnen bei dem Überdruck, der bei der anschließenden Klimatisierung weiterhin herrscht, erst langsam aus ihnen heraus, wodurch bei der Wiederingebrauchnahme der Räume selbst nach gründlichem Spülen mit Frischluft noch für längere Zeit mit Spuren des ggf. toxischen (Äthylenoxid) oder zumindest als störender Geruchsstoff wirkenden (Äthanol) Desinfektionsmittels zu rechnen ist.

Die vorgenannten Schwierigkeiten bei einer Desinfektion unter Überdruck können bei chemisch neutralisierbaren Desinfektionsmitteln zumindest teilweise dadurch vermieden werden, daß während der Einwirkdauer eines Neutralisierungsmittels der Gasdruck in dem Raum bzw. den Räumen gegenüber dem darin während der Einwirkdauer des Desinfektionsmittels aufrechterhaltenen Gasdruck erhöht wird. Das Neutralisierungsmittel dringt dann tiefer in die Ritzen und Spalte ein, erreicht so sämtliches Desinfektionsmittel und sorgt für dessen weitestgehende Neutralisierung. Allerdings ist mit einem stellenweise unterschiedlichen Anfall von Desinfektionsmittel und Neutralisierungsmittel zu rechnen, weshalb man sicherheitshalber einen Überschuß an Neutralisierungsmittel verwenden muß. Beide Gründe führen dazu, daß dann andererseits nach dem Ende des Desinfektionsvorganges und nach einem Spülen mit Frischluft weiterhin mit Spuren des Neutralisierungsmittels in der Raumluft zu rechnen ist.

Eine noch günstigere Lösung der vorstehend aufgezeigten Schwierigkeiten besteht darin, daß während der Einwirkdauer und vorzugsweise auch während des Einbringens des Desinfektionsmittels in dem zu desinfizierenden Raum bzw. Räumen ein Druck aufrechterhalten wird, der höchstens so groß ist wie der Umgebungsdruck. Bei gegenüber dem Umgebungsdruck gleichem Druck diffundiert im allgemeinen das Desinfektionsmittel aufgrund seines gegenüber dem Luftdruck höheren Partialdrucks noch genügend weit in Ritzen und Spalten hinein, um ggf. hier vorhandene Keime zu erreichen, ohne daß es jedoch durch Ansammlung in Ritzen und Spalten schwer entfernbar oder schwer neutralisierbar würde. Bei Unterdruck gegenüber der Umgebungsluft tritt sogar in Ritzen und Spalten vorhandene Luft aus diesen in den Raum bzw. die Räume ein, spült dabei in den Ritzen und Spalten enthaltene Keime mit sich ins Rauminnere und wird somit der Wirkung des Desinfektionsmittels ausgesetzt, ohne daß dieses selbst in nennenswertem Maße in die Ritzen und Spalte eindringen könnte. Daher ist dann anschließend leicht eine vollständige Entfernung des Desinfektionsmittels möglich.

Schließlich kann auch während der Einwirkdauer ein zyklischer Wechsel zwischen Unterdruck und Überdruck in dem zu desinfizierenden Raum bzw. den Räumen vorgenommen werden, wobei vorzugsweise die Zyklusdauer einer Überdruckphase und einer darauffolgenden Unterdruckphase mehrfach geringer als die Einwirkdauer ist. Hierdurch kommen die Vorteile der vorgenannten Verfahrensweisen mit Überdruck bzw. Unterdruck kombiniert zur Geltung. Durch den Unterdruck werden Keime aus Ritzen gewissermaßen herausgesaugt und dem Desinfektionsmittel ausgesetzt, während in der jeweiligen Überdruckphase in die Ritzen Desinfektionsmittel hineingedrückt wird. Zweckmäßig endet dabei die Einwirkdauer mit einer Unterdruckphase, da hierdurch das anschließende Entfernen des Desinfektionsmittels vorbereitet und erleichtert wird.

Wie oben erläutert, wird während der Einwirkdauer die Feuchte so geregelt werden, daß sie den günstigsten Wert für die Wirksamkeit des Desinfektionsmittels aufweist. In der Praxis läßt sich allerdings meist ein Wertebereich gewisser Breite angeben, innerhalb dessen die Feuchte variieren kann, ohne daß eine merkliche Verringerung der Desinfektionswirkung hingenommen werden müßte. Insbesondere kann meist die Feuchte gegenüber dem als günstigster Wert ermittelten zu höheren Werten hin verstellt werden, ohne daß dies eine merkliche Verringerung der Desinfektionswirkung nach sich zöge. Wenn daher weiter nach einer oben erläuterten Ausgestaltung des Verfahrens vor dem Einbringen des Desinfektionsmittels eine starke Kühlung des Raumes bzw. der Räume erfolgt, um anschließend während des Einbringens und zumindest während des Beginns der Einwirkdauer ein Kondensieren des Desinfektionsmittels und ggf. seines Lösungsmittels auf den unter den Taupunkt gekühlten Oberflächen zu erreichen, so kann, um dieses Kondensieren zu fördern, die Feuchte durchaus auf hohe Werte geregelt werden, ohne daß hierdurch die Wirksamkeit des Verfahrens litte oder die erforderliche Einwirkdauer merklich verlängert würde. Dieses Verfahren ist allerdings dann, wenn für eine möglichst günstige Desinfektionswirkung an sich geringere Feuchtewerte genügen würden, nicht das ökonomischste. In diesem Fall ist es vielmehr zweckmäßig, die Feuchte so zu regeln, daß bei der jeweiligen Temperatur der Innenseite des Raums bzw. der Räume der Taupunkt unterschritten bleibt, solange hierdurch der für eine möglichst günstige Desinfektionswirkung geltende Feuchtewert nicht unterschritten wird. Man beginnt dabei also mit einem zwar gegenüber dem normalen Klimatisierungsbetrieb der Klimaanlage erhöhten, jedoch noch nicht allzu hohen Wert der Feuchte, beispielsweise dem für die Desinfektionswirkung günstigsten Wert, am Anfang der Einwirkdauer und steigert den Feuchtewert in dem Maß, wie sich die Innenflächen des Raums bzw. der Räume beim Kondensieren des Desinfektionsmittels infolge der von diesem abgegebenen Wärme erwärmen. Diese Veränderung der Feuchte kann in Abhängigkeit von der gemessenen Temperatur der Innenflächen des Raums bzw. der Räume geregelt werden. Sobald allerdings während der Einwirkdauer eine genügende Menge des Desinfektionsmittels kondensiert ist, ist eine weitere Erhöhung der Feuchte nicht mehr erforderlich; die Dauer bis zum Erreichen der genügenden Menge, die im allgemeinen nur einen Teil der gesamten Einwirkdauer ausmacht, kann im jeweiligen Anwendungsfall leicht empirisch bestimmt werden. Danach kann während des restlichen Zeitabschnitts der Einwirkdauer wieder der für eine möglichst günstige Desinfektionswirkung geltende Feuchtewert eingehalten werden.

Im allgemeinen wird man vor dem Desinfizieren des Raums bzw. der Räume alle ortsbeweglichen Gegenstände entfernen und gesondert in geeigneten Vorrichtungen desinfizieren. Größere oder aus sonstigen Gründen schwer oder nicht entfernbare Geräte müssen jedoch oft an Ort und Stelle verbleiben. Hierunter befinden sich auch Geräte, insbesondere elektromedizinische Geräte, die ein Gehäuse und darin untergebrachte, gegenüber Feuchtigkeit korrosionsempfindliche Teile aufweisen. Dabei besteht die Gefahr, daß beim Kondensieren des Desinfektionsmittels und/oder des Neutralisierungsmittels und der Feuchte auf den Innenflächen des Raumes bzw. der Räume und auf den Außenflächen des Geräts gleiches auch in dessen Innerem auf den genannten Teilen erfolgt, daß dann nach Beendigung des Desinfektionsvorganges diese Teile nicht vollständig getrocknet sind und daß daher Korrosion auftritt. Um diese Gefahr zu vermeiden, kann dem Inneren solcher Geräte ein Warmluftstrom zugeführt werden, um die genannten Teile auf einer oberhalb des Taupunkts liegenden Temperatur zu halten, während die Feuchte auf den übrigen, zuvor abgekühlten Flächen in der bereits erläuterten Weise zum Kondensieren gebracht wird. Besonders zweckmäßig ist es dabei, einen Teilstrom des dem Raum bzw. den Räumen zugeführten Gasgemischs aus dem Zuluftkanal der Klimaanlage zu entnehmen, zu entfeuchten und dann vor der Zuführung ins Innere des Geräts zu erwärmen, da hierdurch dessen innere Teile ebenfalls dem Desinfektionsmittel und dem Neutralisierungsmittel ausgesetzt werden können, nicht jedoch mit korrosionsfordernder Feuchte beaufschlagt werden. Die Entnahme des Gasgemischs aus dem Zuluftkanal erfolgt am günstigsten unmittelbar stromauf eines in diesem liegenden Filters, da der an dem Filter auftretende Druckabfall so genutzt werden kann, das Gasgemisch mit gegenüber dem Rauminnendruck höherem Druck ins Innere des Geräts einzuführen; im allgemeinen wird dessen Gehäuse genügende Öffnungen aufweisen, um ein anschließendes Austreten des warmen Gasgemischs in den umgebenden Raum zu gestatten, während erforderlichenfalls eine solche Öffnung auch zusätzlich geschaffen werden kann.

Zur Desinfektionsmittelentfernung nach Abschluß des Desinfektionsvorganges bestehen mehrere Möglichkeiten. Die einfachste besteht darin, daß das Desinfektionsmittel durch Frischluftzufuhr ausgeblasen wird. Dies ist in einfacher Weise nur dann möglich, wenn das Desinfektionsmittel für Menschen und Tiere nicht toxisch wirkt und auch am Ende der Einwirkdauer noch gasförmig vorliegt oder zumindest bei flüssigem Zustand einen so hohen Dampfdruck aufweist, daß es durch Frischluft in angemessener Zeit abgeführt werden kann. Sofern das Desinfektionsmittel für Menschen toxisch wirkt, darf es nur in geringen Mengen je Zeiteinheit und/oder in geringen Konzentrationen an die Umgebungsluft abgegeben werden, weshalb dann die Frischluftzufuhr mit geringen Werten beginnend derart gesteigert wird, daß die mit der Fortluft je Zeiteinheit abgeführte Menge bzw. die Konzentration des Desinfektionsmittels in der Fortluft anfänglich zumindest annähernd konstant bleibt und einen geringen Wert aufweist; zum Konstanthalten der Konzentration in der Fortluft muß man dieser Frischluft zuführen, beispielsweise über einen gesonderten Außenluftkanal mit einem darin liegenden Ventilator. In diesem Zusammenhang sei beispielsweise erwähnt, daß die Konzentration von Äthylenoxid in der Fortluft maximal 20 mg/m$^3$ betragen darf.

Ein weiteres und im allgemeinen noch günstigeres Verfahren zur Entfernung des Desinfektionsmittels besteht darin, daß dieses zumindest teilweise physikalisch absorbiert, vorzugsweise ausgewaschen wird. Dieses Verfahren eignet sich beispielsweise zum Entfernen des stark hygroskopischen Triäthylenglykols und in geringerem Maße auch für das mit Wasser mischbare Äthylenoxid. Das erhaltene Abwasser kann dann seinerseits durch geeignete Mittel chemisch nachbehandelt werden, um einen Gehalt ausschließlich an solchen Stoffen zu erreichen, da danach unbedenklich der Kanalisation zugeführt werden können.

Eine weitere, vorstehend bereits mehrfach erwähnte Möglichkeit zur Beseitigung des Desinfektionsmittels nach Beendigung des Desinfektionsvorgangs besteht darin, daß das Desinfektionsmittel chemisch neutralisiert wird; unter "Neutralisieren" wird im vorliegenden Zusammenhang in Übereinstimmung mit dem in der Desinfektionstechnik üblichen Sprachgebrauch die Umsetzung des Desinfektionsmittels mit einem anderen Mittel, dem Neutralisationsmittel, derart verstanden, daß das Reaktionsprodukt oder die Reaktionsprodukte medizinisch unbedenklich sind und insbesondere nicht toxisch sind, nicht also notwendig die Reaktion zwischen einem basischen Mittel und einer Säure. Das Neutralisationsmittel wird zweckmäßig wie das Desinfektionsmittel gasförmig oder in möglichst fein vernebelter Form eingebracht, zweckmäßig in eine Luftleitung der Klimaanlage und vorzugsweise an derselben Stelle wie das Desinfektionsmittel. Nicht nur, wie bereits erwähnt, bei Anwendung eines Überdrucks gegenüber der Umgebungsluft während der Einwirkungsdauer des Desinfektionsmittels, sondern auch in sonstigen Fällen ist es zweckmäßig, das Neutralisationsmittel in gegenüber der eingebrachten Menge des Desinfektionsmittels überschüssiger Menge einzubringen. Als Beispiel für eine Neutralisierung am Ende der erforderlichen Einwirkungszeit wird Ammoniak zugeführt, wenn als Desinfektionsmittel Formaldehyd verwendet wird, jedoch ist Ammoniak auch bei weiteren Desinfektionsmitteln als Neutralisationsmittel verwendbar. Formaldehyd und Ammoniak bilden als Reaktionsprodukt eine weißes, kristallines, nur schwach in Wasser lösliches Pulver, das in der Hauptsache aus dem als Konservierungsmittel bekannten Hexamethylentetramin besteht. Dieses kann, soweit es störend wirkt, von den desinfizierten Flächen abgewischt werden, ist jedoch auch bei seinem Verbleiben medizinisch unbedenklich. In den Kanälen der Klimaanlage wird es durch die Luftströmung mitgenommen und in den in der Klimaanlage vorgesehenen Filtern abgeschieden.

Zur Beseitigung des Desinfektionsmittels nach dem Ablauf der Einwirkzeit können die vorstehend beschriebenen Verfahren auch in Kombination angewandt werden. So kann beispielsweise zunächst die Konzentration des Desinfektionsmittels durch physikalische Absorption verringert werden, dann der größte Teil des verbleibenden Rests durch chemische Neutralisation gebunden werden und schließlich der geringe verbleibende Rest durch Zufuhr von Frischluft ausgespült werden. Eine Spülung mit Frischluft ist in jedem Fall dann zweckmäßig, wenn anschließend die Klimatisierung unter teilweiser Verwendung von Umluft erfolgt, um jeglichen Rest von verbliebenem Desinfektionsmittel und/oder Neutralisationsmittel zu entfernen.

Bei jeder Art der Entfernung des Desinfektionsmittels nach Ablauf der Einwirkzeit ist es im allgemeinen günstig, wenn während des Entfernungsvorgangs das dem Raum bzw. den Räumen zugeführte Gasgemisch erwärmt wird, sei es, um die Aufnahme des Desinfektionsmittels in der Spülluft zu erleichtern, sei es, um die Löslichkeit des Desinfektionsmittels bei der physikalischen Absorption zu erhöhen, oder sei es, um die Reaktionsfreudigkeit zwischen Desinfektionsmittel und Neutralisierungsmittel zu verbessern.

Während der Dauer der Entfernung des Desinfektionsmittels nach Ablauf der Einwirkzeit kann, in entsprechender Weise wie dies bereits für den Verfahrensablauf während der Einwirkdauer beschrieben wurde, die Klimaanlage in üblicher Weise so betrieben werden, daß im Operationsraum und ggf. dem Vorbereitungsraum ein Überdruck gegenüber dem Umgebung herrscht. Ebenfalls kann wieder, und zwar mit noch verbessertem Erfolg hinsichtlich des Entfernens des Desinfektionsmittels, während der Dauer der Entfernung des Desinfektionsmittels die Klimaanlage derart betrieben werden, daß in dem Raum bzw. den Räumen ein Unterdruck gegenüber der Umgebung herrscht, da dann das in ggf. vorhandenen Ritzen der Räume enthaltene Desinfektionsmittel aus diesen leichter ausdünstet und leichter entfernt werden kann. Schließlich ist es auch während der Dauer der Entfernung des Desinfektionsmittels möglich, zyklisch den Raum bzw. die Räume einem Unterdruck und einem Überdruck gegenüber der Umgebung auszusetzen, wobei dieser zyklische Wechsel mehrmals während der genannten Dauer erfolgt. Diese Verfahrensweise ist beispielsweise dann von Vorteil, wenn ein Desinfektionsmittel verwendet wird, das die menschliche Atmung beeinträchtigt, und wenn dieses Desinfektionsmittel durch Spülen mit Frischluft entfernt wird. Durch das abwechselnde verstärkte Ausdünsten des Desinfektionsmittels aus Ritzen und Poren während der Unterdruckphase und Eindringen der Frischluft in diese Ritzen und Poren während der Überdruckphase wird dann das Entfernen des Desinfektionsmittels beschleunigt. Ebenfalls kann der Wechsel zwischen Überdruck und Unterdruck dann zweckmäßig sein, wenn zum Entfernen des Desinfektionsmittels ein Neutralisierungsmittel verwendet wird.

Eine Einrichtung zur Durchführung des Verfahrens gemäß der Erfindung geht aus von der üblichen Konstruktion mit einer Klimaanlage, die mit der Umgebungsluft über je einen Außenluft- und Fortluftkanal und mit dem Operationsraum sowie ggf. mindestens einem weiteren Raum über einen Zuluft- und einen Abluftkanal in Verbindung steht, wobei in den Zuluftkanal ein Ventilator, ein Erhitzer, ein Kühler, eine Befeuchtungsvorrichtung, saugseitig ein Vorfilter und druckseitig ein weiteres Filter eingeschaltet sind, in den Abluftkanal ein weiterer Ventilator eingeschaltet ist, der Außenluftkanal und vorzugsweise auch der Fortluftkanal zur Umgebung hin mittels einer Absperrvorrichtung luftdicht abschließbar ist und im Zuluftkanal stromab des weiteren Filters ein Desinfektionsmittel einbringbar ist. Zur Durchführung des Verfahrens ist die Einrichtung derart ausgebildet, daß zwischen dem druckseitigen Abschnitt des Abluftkanals und einer im Zuluftkanal zwischen der Absperrvorrichtung des Außenluftkanals und dem Vorfilter gebildeten Mischkammer ein mittels einer weiteren Absperrvorrichtung luftdicht absperrbarer Beipaß liegt.

Die Einrichtung zur Durchführung des Verfahrens gemäß der Erfindung wird im folgenden anhand der Zeichnungen näher erläutert, in denen ein Ausführungsbeispiel dargestellt ist. Es zeigen

Fig. 1 einen teilweisen Längsschnitt durch einen Operationsraum, einen zugeordneten Vorbereitungsraum und die zugehörige Klimaanlage;

Fig. 2 eine stirnseitige Ansicht der Klimaanlage gemäß Fig. 1 bei Blick in Richtung II—II;

Fig. 3 eine Draufsicht auf die Klimaanlage gemäß Fig. 1 und 2;

Fig. 4 einen teilweisen Schnitt durch die Innenauskleidung des Operations- und Vorbereitungsraums in Fig. 1;

Fig. 5 eine teilweise geschnittene, perspektivische Ansicht des Rotors des Wärmetauschers der Klimaanlage gemäß Fig. 1 bis 3;

Fig. 6 in teilweise geschnittener, perspektivischer Darstellung ein bei der Klimaanlage gem. Fig. 1 bis 3 verwendetes Luftleistungs-Meßgerät.

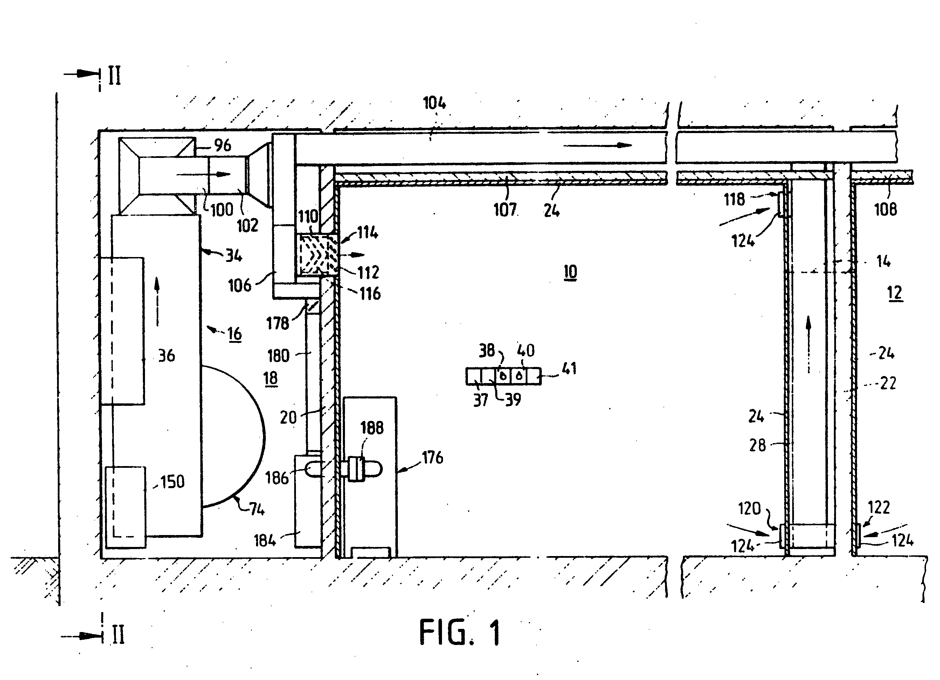

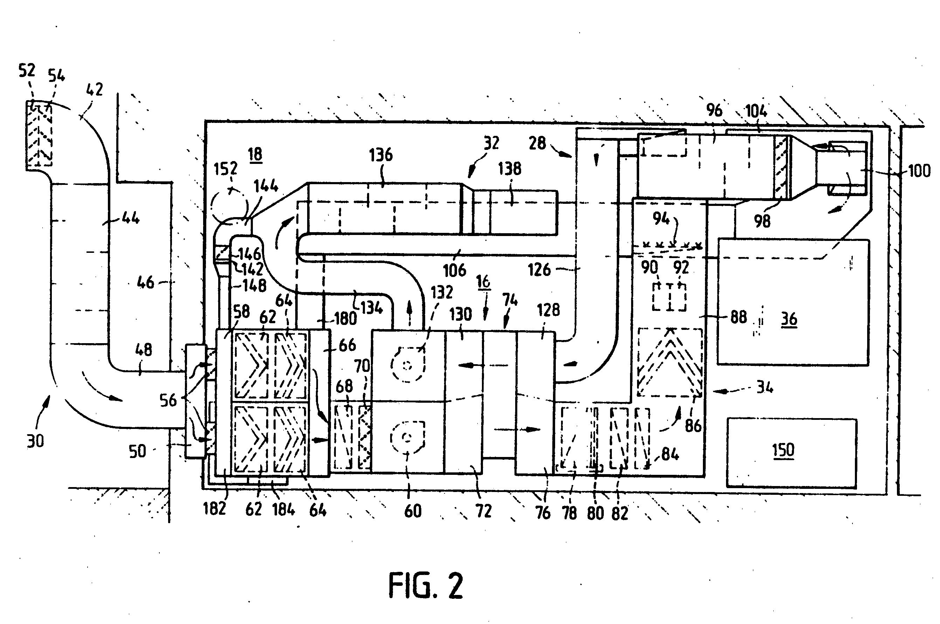

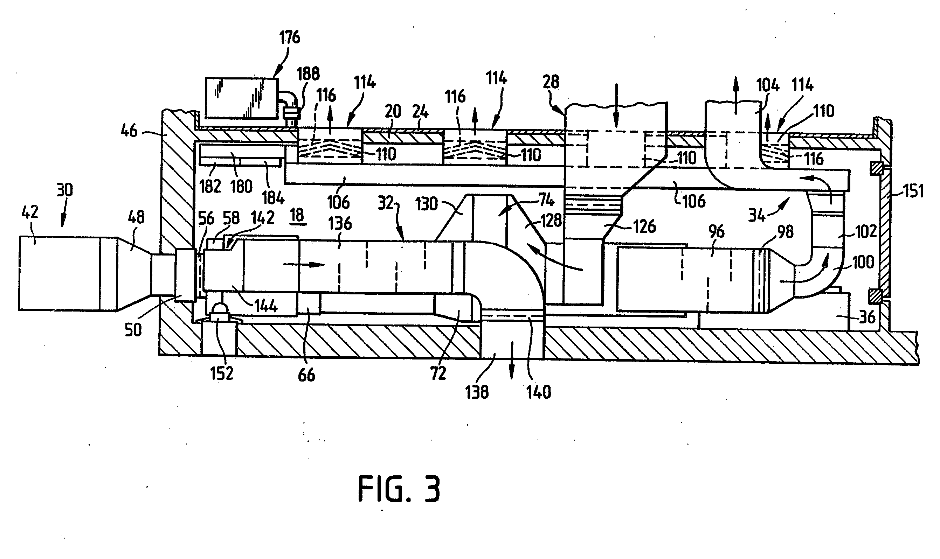

Fig. 1 zeigt den klimatisierten und bei Bedarf zu desinfizierenden Operationsraum 10 und teilweise einen benachbarten Vorbereitungsraum 12, die durch einen bei 14 angedeuteten, hinter der Zeichenebene liegenden Durchgang miteinander in Verbindung stehen; der Durchgang ist luftdicht verschließbar. Zur Klimatisierung ist eine Klimaanlage 16 vorgesehen, die überwiegend in der Klimazentrale 18 untergebracht ist. Diese liegt auf der dem Vorbereitungsraum 12 gegenüberliegenden Seite des Operationsraumes 10, diesem unmittelbar an einer Wand 20 benachbart. Zwischen Operationsraum 10 und Vorbereitungsraum 12 liegt eine Wand 22, die auf der Seite des Operationsraumes 10 eine von ihr beabstandete Innenverkleidung 24 trägt, um zwischen Wand 22 und Innenverkleidung 24 einen Abluftkanal 28 (Fig. 2, 3) unterbringen zu können. Pfeile deuten in allen Figuren die jeweilige Strömungsrichtung der Luft bzw. des beim Desinfektionsvorgang verwendeten Gasgemischs an.

Zum Aufbau der Klimaanlage 16 sei auf die Fig. 1 bis 3 verwiesen. Die Klimaanlage 16 umfaßt einen Außenluftkannal 30 und einen Fortluftkanal 32, über die sie mit der Umgebung in Verbindung steht, sowie einen Zuluftkanal 34 und den bereits genannten Abluftkanal 28, über die sie mit dem Operationsraum 10 und dem Vorbereitungsraum 12 in Verbindung steht. Zur Steuerung aller Funktionen der Klimaanlage 16 ist ein Steuerschrank 36 in der Klimazentrale 18 vorgesehen, wobei für die Regelung der Feuchte und Temperatur im Operationsraum 10 entsprechende Feuchte- und Temperaturmeßfühler 37 bzw. 39 und Sollwertsteller 38 bzw. 40 angeordnet sind. Ein weiterer Temperaturmeßfühler 41 erfaßt die Temperatur der Innenfläche des Operationsraums, um in Abhängigkeit hiervon die Feuchte so regeln zu können, daß sie genügt, während des anfänglichen Abschnitts der Einwirkdauer die gewünschte Kondensation zu erzielen. Die Sollwertsteller 38, 40 sind nur während der Klimatisierung wirksam; während des gesamten Desinfektionsvorganges erfolgt eine Programmsteuerung von dessen Ablauf auch hinsichtlich Temperatur und Feuchte.

Der Außenluftkanal 30 besteht aus einer Hutze 42, einem Schalldämpfer 44, einem durch die Außenwand 46 der Klimazentrale 18 hindurchgeführten Bogen 48 und einer Verteilerkammer 50. In der Hutze 42 ist eingangsseitig eine Jalousie 52 sowie hinter dieser eine Klappen-Absperrvorrichtung 54 angeordnet. Aus der Verteilerkammer 50 kann die Außenluft über zwei luftdicht absperrbare Klappenanordnungen 56 in eine Mischkammer 58 eintreten, mit der der Zuluftkanal 34 beginnt.

In den Zuluftkanal 34 ist ein Ventilator 60 eingeschaltet. Saugseitig, d.h. stromauf des Ventilators 60 liegen parallel zueinander zwei Vorfilter 62, zwei diesen jeweils nachgeschaltete Schwebstoffilter 64, ein Verbindungsabschnitt 66, ein elektrischer Vorwärmer 68 und eine Regelklappenanordnung 70. Der Vorwärmer 68 dient zur Verhinderung von Eisbildung bei tiefen Temperaturen der Außenluft. Druckseitig, d.h. stromab des Ventilators 60, wird die Zuluft zunächst über einen der Querschnittsanpassung dienenden, kurzen Kanalabschnitt 72 einem Regenerativ-Wärmetauscher 74 zugeführt. Danach strömt sie über einen weiteren kurzen Kanalabschnitt 76, einen Kühler 78 mit nachgeschaltetem Tropfenfänger 80, einen von Warmwasser gespeisten Nachwärmer 82, einen weiteren, elektrisch beheizbaren Nachwärmer 84 und ein Filter 86 sowie durch eine Kammer 88.

Der Kühler 78 hat gegenüber der üblichen Ausführung bei Klimaanlagen für Operationsräume eine erhöhte Kühlleistung, um den Operationsraum 10 und den Vorbereitungsraum 12 vor dem Einbringen der Desinfektionsmittellösung stark unterhalb von deren Taupunkt abkühlen zu können. Anders gesagt, ist die Klimaanlage 16 so ausgelegt, daß der Stellbereich der von ihr im Operationsraum 10 und im Vorbereitungsraum 12 unter allen Umgebungsbedingungen aufrechtzuerhaltenden Temperatur sich über die übliche Stellbereichsgrenze von 21°C hinaus zu tieferen Werten hin erstreckt. Weiter haben der Nachwärmer 82 und/oder der Nachwärmer 84 zumindest bei gemeinsamem Betrieb eine derartige Leistungsfähigkeit, daß sie die Temperatur des Operationsraumes 10 und des Vorbereitungsraumes 12 während der Einwirkungsdauer des Desinfektionsmittels trotz der vorangegangenen Kühlung in kurzer Zeit auf die für die Wirksamkeit des Desinfektionsmittels günstigste, relativ hohe Temperatur bringen können. Auch sie sind daher gegenüber den Nachwärmern üblicher Klimaanlagen hinsichtlich ihrer abgebbaren Wärmeleistung stärker dimensioniert.

In der Kammer 88 sind ein Gerät 90 zum Einbringen eines Desinfektionsmittels, im Ausführungsbeispiel zum Verdampfen von Formalin, und ein weiteres Gerät 92 zum Einbringen eines Neutralisierungsmittels, im Ausführungsbeispiel zum Verdampfen von Ammoniak, untergebracht. Die Geräte 90, 92 sind mittig in der Kammer 88 angeordnet, so daß sie allseitig von der Zuluft umströmt werden und daß das Desinfektionsmittel bzw. das Neutralisierungsmittel unmittelbar in die Zuluft gelangt. Oberhalb der Kammer 88 ist ein Dampfbefeuchter 94 vorgesehen. Von hier gelangt die Zuluft über einen Schalldämpfer 96, eine luftdicht absperrbare Klappenanordnung 98, einen Bogenabschnitt 100 und ein Durchflußmeßgerät 102 in zwei Zweigkanäle 104, 106. Der Zweigkanal 104 verläuft durch die Wand 20, einen oberhalb einer Zwischendecke 107 (Fig. 1) des Operationsraums 10 liegenden Zwischenraum und die Wand 22 in einen Zwischenraum, der oberhalb der Zwischendecke 108 des Vorbereitungsraums 12 liegt. In der Zwischendecke 108 sind nicht näher dargestellte Öffnungen vorgesehen, an denen der Zweigkanal 104 in den Vorbereitungsraum 12 mündet.

Der gegenüber dem Zweigkanal 104 tiefer liegende Zweigkanal 106 des Zuluftkanals 34 verläuft parallel zu der die Klimazentrale 18 und den Operationsraum 10 trennenden Wand 20 innerhalb der Klimazentrale 18. Vom Zweigkanal 106 gehen vier Mündungsabschnitte 110 aus, die die Wand 20 durchsetzen und zu mit Jalousien 112 (Fig. 1) bedeckten Öffnungen 114 führen, durch die die Zuluft in den Operationsraum gelangt. In den Mündungsabschnitten 110 liegen, wie in Fig. 1 angedeutet, unmittelbar stromauf der Jalousien und damit in nächster Nähe der Öffnungen 114 jeweils Schwebstoffilter 116; entsprechendes gilt für die Öffnungen im Vorbereitungsraum 12.

Die Abluft aus dem Operationsraum 10 tritt in den Abluftkanal 28 über obere, der Zwischendecke 107 benachbarte Öffnungen 118 und untere, nahe dem Fußboden liegende Öffnungen 120 ein, die den Zuluftöffnungen 114 im Operationsraum 10 gegenüberliegen. Im Vorbereitungsraum 12 liegen mit dem Abluftkanal 28 in Verbindung stehende Abluftöffnungen 122 nahe dem Fußboden. Alle Abluftöffnungen 118, 120, 122 sind mit Schwebstoffilter-Matten 124 bedeckt, um das Eindringen von Keimen zu erschweren und um im Falle eines Desinfektionsvorganges die in den Filtermatten 124 aufgefangenen Keime für das Desinfektionsmittel besonders leicht zugänglich zu machen. Der Abluftkanal 28 ist im Zwischenraum zwischen der Wand 22 und der ihr benachbarten Innenauskleidung 24 nach oben geführt und verläuft im Raum oberhalb der Zwischendecke 107 parallel zum Zweigkanal 104 des Zuluftkanals 34. Nach der Hindurchführung durch die Wand 20 ist der Abluftkanal 28 mit Kanalabschnitten 126, 128 an den Wärmetauscher 74 angeschlossen. Die diesen durchströmende Abluft wird über einen weiteren Kanalabschnitt 130, einen Abluftventilator 132 und einen doppelt gekrümmten Kanalabschnitt 134 dem Fortluftkanal 32 zugeführt.

Der Fortluftkanal 32 umfaßt einen Schalldämpfer 136 und einen ins Freie führenden Kanalbogen 138, in den eine luftdicht abschließbare Klappenanordnung 140 eingeschaltet ist.

An der Verbindungsstelle des oberen Endes des Kanalabschnitts 134 und des Fortluftkanals 32 ist ein Beipaß 142 abgezweigt, der ein nach unten gerichtetes Bogenstück 144, eine luftdicht abschließbare Klappenanordnung 146 und einen senkrechten Kanalabschnitt 148 umfaßt, welch letzterer an seinem unteren Ende in die Mischkammer 58 mündet.

Im Operationsraum 10 ist nahe der Wand 20 ein elektromedizinisches Gerät 176 angeordnet, das so schwer ist, daß es bei einem Desinfektionsvorgang nicht ohne weiteres entfernt werden könnte und daher im Operationsraum 10 belassen wird. Um eine Korrosion der im Inneren des Geräts vorhandenen Teile nach dem Kondensieren des Desinfektionsmittels und der Feuchte aufgrund ungenügender anschließender Trocknung zu vermeiden, wird ihm bereits vor dem Einbringen des Desinfektionsmittels, während der Operationsraum 10 und der Vorbereitungsraum 12 stark gekühlt werden, sowie während der Einwirkdauer und ggf. während des Entfernens des Desinfektionsmittels Warmluft bzw. ein erwärmtes Gasgemisch zugeführt. Hierzu ist das Innere des Geräts 176 stromauf der Schwebstoffilter 116 über eine luftdichte Klappe 178, einen Kanal 180, einen Entfeuchter 182, einen Erhitzer 184, eine Rohrleitung 186 und eine lösbare Rohrkupplung 188 an das Ende des Zweigkanals 106 des Zuluftkanals 34 angeschlossen.

Abweichend vom Ausführungsbeispiel könnte der Kanal 180 auch stromauf der Kammer 88, beispielsweise in Fig. 2 unterhalb des Filters 86, an den Zuluftkanal 34 angeschlossen sein, um die Entfeuchtung des zugeführten Gasgemischs zu erleichtern. In diesem Fall könnte diese Zuführung auch während der Dauer des Einbringens des Desinfektionsmittels erfolgen, während sie beim oben beschriebenen Ausführungsbeispiel zweckmäßig unterbrochen wird, solange das Desinfektionsmittel eingebracht und mittels des Befeuchters 94 das Gasgemisch befeuchtet wird.

Insgesamt ist die Klimaanlage 16 weitgehend aus genormten Bauteilen und derart raumsparend aufgebaut, daß ihre in der Klimazentrale 18 liegenden Bauteile leicht zugänglich sind. Die Klimazentrale 18 ist ihrerseits durch eine Tür 151 zugänglich und mittels eines Abluftventilators 152 mit der Umgebung verbunden.

Bei normalem Betrieb der Klimaanlage 16 sind die Klappenanordnungen 56 geöffnet, und die Außenluft wird vom Ventilator 60 angesaugt und als Zuluft dem Operationsraum 10 und dem Vorbereitungsraum 12 zugeführt, während die Abluft mittels des Ventilators 132 abgesaugt und zumindest teilweise über den Fortluftkanal 32 abgeführt wird. Dabei wird durch den Wärmetauscher 74 eine Energie- und Feuchtigkeitsrückgewinnung erzielt, indem die Abluft den aus einer anorganischen Speichermasse bestehenden Rotor des Wärmetauschers 74 erwärmt, der bei seinem Umlauf die Wärme und Feuchtigkeit wieder an die Zuluft abgibt, so daß ein optimaler Wirkungsgrad erzielt wird. Bei hoher Außentemperatur kann der Wärmetauscher 74 stillgesetzt werden, und mittels des Kühlers 78 kann eine Kühlung der Zuluft erfolgen. Das Kältemittel des Kühlers 78 wird mittels einer ebenfalls in der Klimazentrale 18 angeordneten Kältemaschine 150 gekühlt. Erfordert die Temperaturregelung andererseits eine Erwärmung der Zuluft, so erfolgt diese mittels des Nachwärmers 82 oder des Nachwärmers 84. Die Befeuchtung der Zuluft erfolgt erforderlichenfalls mittels des Dampfbefeuchters 94.

Während eines Desinfektionsvorganges werden die Klappenanordnungen 56 geschlossen, und die Klappenanordnung 146 im Beipaß 142 wird voll geöffnet. Die Klappenanordnung 140 des Fortluftkanals 32 wird geschlossen. Damit wird die Luft zwischen Operationsraum 10 und Vorbereitungsraum 12 einerseits und Klimaanlage 16 andererseits in einem geschlossenen Kreislauf geführt, und der Desinfektionsvorgang kann in bereits beschriebener Weise durchgeführt werden.

Die Ausbildung der Klimaanlage 16 mit dem Beipaß 142 sowie die zusätzliche Anordnung der Schwebstoffilter 64, des Filters 86, der Schwebstoffilter 116 und der Schwebstoffilter-Matten 124 bringt neben der Möglichkeit einer einfachen und sicheren Desinfektion noch einen wesentlichen Vorteil für den normalen Betrieb der Klimaanlage. Diese kann nämlich abweichend vom üblichen Betrieb der Klimaanlagen für Operationsräume auch während der Klimatisierung teilweise mit Umluft betrieben werden, indem die Klappenanordnung 146 im Beipaß 142 teilweise geöffnet bleibt. Hierdurch kann der Leistungsbedarf der Klimaanlage 16 gegenüber üblichen Lösungen herabgesetzt werden. Trotzdem ist durch die zusätzliche Filterung eine Keimübertragung ausgeschlossen, und es entfallen auch sonst vorhandene Bedenken gegen die Verwendung eines Wärmetauschers 74 mit rotierender Speichermasse.

Beim Vorfilter 62 handelt es sich zweckmäßig um ein Filter der Klasse B2 oder evtl. um ein Feinstfilter der Klasse C nach Walter: "Probleme der Luftreinhaltung bei Verwendung moderner Filter", Staub-Reinh. 25 (1965), Seiten 441 bis 447. Bei den Schwebstoffiltern 64 und 116 sowie den Schwebstoffilter-Matten 124 handelt es sich zweckmäßig um Hochleistungs-Schwebstoffilter der Klasse S (DIN 24184), die mehr als 99% aller ihnen zugeführter Keime auffangen. Das Filter 86 kann von der Klasse C oder zweckmäßiger noch wie beim Ausführungsbeispiel ebenfalls von der Klasse S sein.

Durch die Vielzahl der verwendeten Filter hoher Wirksamkeit, insbesondere also der Filter 64, 86, 116 und 124, wird erreicht, daß das Innere der Klimaanlage 16 bei normalem Klimatisierungsbetrieb nahezu die gleiche Reinheitsstufe wie der Operationsraum 10 selbst aufweist. Bei einer Kontamination des Operationsraumes 10 halten die Filtermatten 124 und die Schwebstoffilter 64 Keime weitgehend vom Inneren der Klimaanlage 16 fern, so daß diese dann sogar wesentlich weniger kontaminiert ist als der Operationsraum 10. Aus diesem Grunde wird eine sichere Desinfektion des Inneren der Klimaanlage 16 zusammen mit der Desinfektion des Operationsraumes 10 und des Vorraumes 12 erreicht, selbst wenn das Desinfektionsmittel die Innenflächen der Klimaanlage 16 nicht überall in gleichem Maße erreichten sollte wie die Innenflächen des Operationsraumes 10.

Die hohe Reinheit des Inneren der Klimaanlage 16 und die Möglichkeit ihrer Desinfektion stellen einen wesentlichen Fortschritt gegenüber bekannten Lösungen dar, bei denen die Reinigung und Desinfektion in der Regel auf den letzten Kanalabschnitt der Klimaanlage zwischen der letzten Filterstufe und dem Zulufteinlaß beschränkt wird (Entwurf der DIN 1946, Blatt 4, vom Juni 1974, Seite 6, Erläuterung zu Abschnitt 2.4.2.1). Diese nachteilige Beschränkung wird bei der beschriebenen Klimaanlage mit Sicherheit vermieden.

Weiter wird bei bekannten Klimaanlagen mit großem Bauaufwand versucht, einer Kontamination des Inneren der Klimaanlage vorzubeugen, indem zu deren Konstruktion besonders "hygienische" Bauelemente verwendet werden. So wird beispielsweise vorgeschrieben, daß für Klimaanlagen der betrachteten Art die einzelnen Bauteile, wie Vorerhitzer, Luftwäscher usw. in "hygienischer" Ausführung ohne Verwendung von verzinktem Blech erstellt werden, daß besondere Anstriche verwendet werden usw. Durch die beschriebene Ausbildung der Klimaanlage hinsichtlich der erwähnten Filter wird dagegen vorteilhafterweise erreicht, daß auf derartige Maßnahmen bei den genannten Bauteilen verzichtet werden kann und daß diese von handelsüblicher Ausführung sein können. Damit wird der Bauaufwand wesentlich verringert, während trotzdem eine bisher nicht gekannte Reinheit und leichte Desinfektionsmöglichkeit erzielt werden.

Abänderungen der Klimaanlage gegenüber den Fig. 1 bis 3 sind selbstverständlich in vielfältiger Weise möglich. Beispielsweise kann die Luftführung im Operationsraum 10 durch veränderte Lage der Zuluftöffnungen 114 und der Abluftöffnungen 118 und/oder 120 in anderer Weise ausgebildet sein. So können die Luftaustritte anstelle in einer Wand auch in der Decke angeordnet sein. Insbesondere ist es auch möglich, die Luftzuführung nach dem sog. Laminar-Flow-Prinzip zu gestalten, d.h. eine turbulenzarme Verdrängungsströmung dadurch zu erzeugen, daß eine große Anzahl von Zuluftöffnungen über die gesamte Fläche einer Wand und/oder zumindest eines Teils der Decke des Operationsraumes verteilt werden, wobei dann die Klimaanlage für entsprechend höhere Luftmengen je Zeiteinheit ausgelegt werden muß.

Zur Klimatisierung von Operationsräumen nach dem Laminar-Flow-Prinzip ist es bereits bekannt und zugelassen, mit einem geringen Anteil von Umluft (bis zu 20%) zu arbeiten. Bei Ausbildung der Klimaanlage in der oben beschriebenen Weise wird demgegenüber jedoch der Vorteil erzielt, daß bedenkenlos ein noch wesentlich größerer Anteil von Umluft verwendet werden kann, wodurch die Klimaanlage wesentlich ökonomischer als bei bekannten Lösungen arbeitet, während trotzdem die Reinheit der Luft gegenüber den bekannten Lösungen verbessert ist und die zusätzliche Möglichkeit zur Desinfektion des Operationsraumes und ggf. der zusätzlichen Räume sowie des Inneren der Klimaanlage besteht.

Bei dem beschriebenen Ausführungsbeispiel wird mittels einer Intervallschaltung der im Steuerschrank 36 vorgesehenen Programmgeber-Steuerschaltung die abwechselnde Einstellung eines Überdrucks und eines Unterdrucks im Operationsraum 10 und im Vorbereitungsraum 12 während der Einwirkdauer des Desinfektionsmittels und während der Dauer des anschließenden Entfernens des Desinfektionsmittels gesteuert. Der Unterdruck wird dadurch erzielt, daß die Förderleistung des Zuluftgebläses 60 (Fig. 2) gegenüber den sonstigen Betriebsfällen vermindert wird, was technisch beispielsweise durch Anschnittsteuerung von in die elektrische Leistungsversorgung eingeschalteten Thyristoren wesentlich einfacher zu realisieren ist als etwa eine Anhebung der Förderleistung des Fortluftgebläses 132.

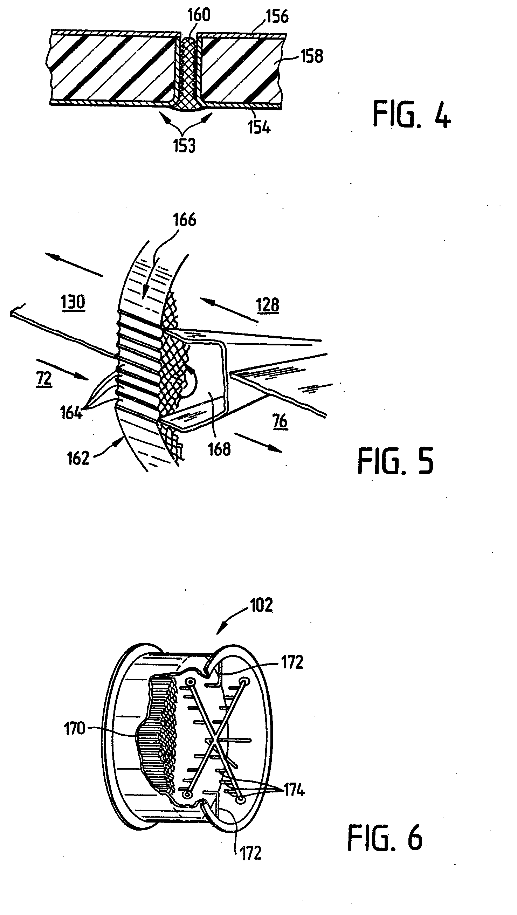

Nicht nur im Operationsraum 10 (Fig. 1) auf der Seite der Wand 22, sondern auch auf allen übrigen Seiten und an der Unterseite der Zwischendecken 107, 108 sind der Operationsraum 10 und der Vorbereitungsraum 12 mit der Innenauskleidung 24 versehen. Diese ist luftdicht unter Vermeidung von Ritzen und Spalten ausgebildet, und zwar besteht sie aus einem Belag von Platten 153, von denen zwei in Fig. 4 teilweise im Schnitt dargestellt sind. Diese Platten 153 liegen unter Belassung einer Stoßfuge zwischen benachbarten Platten in einer zur jeweiligen Wandung parallelen Ebene.

Sie sind aus drei Schichten aufgebaut. Die zum Raum 10 bzw. 12 hin liegende Schicht besteht aus einem Edelstahlblech 154. Die der Wandung zugekehrte Schicht besteht aus einem verzinkten Stahlblech 156. Edelstahlblech 154 und Blech 156 haben einen gegenseitigen Abstand von 20 mm. Der Hohlraum zwischen ihnen ist mit einem Kunststoff ausgeschäumt, der die mittlere Schicht 158 bildet. Die Dicke des Edelstahlblechs 154 und des Blechs 156 beträgt jeweils 1 mm. Insgesamt ergibt sich so ein stabiler Aufbau, der eine Befestigung an nur wenigen Befestigungspunkten erfordert. In den Stoßfugen verlaufen Dichtungsstreifen 160 aus Silikonkautschuk, die eine luftdichte Abdichtung gewährleisten. Die Dichtungsstreifen 160 haben eine derartige Form, daß sie einem Überdruck oder einem Unterdruck in den Räumen 10, 12 nicht nachgeben; in der Stoßfuge weisen sie einen tannenbaumartigen Querschnitt auf, während sie mit einem verbreiterten, bandförmigen Querschnitt auf den Randbereichen der Edelstahlbleche 154 aufliegen.

Abgesehen davon, daß die Edelstahlbleche 154 allen hygienischen Anforderungen genügen und insbesondere leicht zu reinigen sind, haben sie im Zusammenhang mit dem Desinfektionsvorgang eine zusätzliche Aufgabe. Wegen ihrer guten Wärmeleitfähigkeit und wegen der aufgrund ihrer Dicke zur Verfügung gestellten Wärmekapazität gewährleisten sie nämlich nach vorausgehender Kühlung beim Einbringen des Desinfektionsmittels durch ihre dann unter dem Taupunkt liegende Temperatur die Kondensation des Desinfektionsmittels und der Feuchte. Um hierbei eine möglichst gleichmäßige Benetzung zu erzielen, ist die dem Raum zugewandte Oberfläche der Edelstahlbleche 154 zweckmäßig mattiert.

Abweichend von Fig. 1 und 4 kann die Innenauskleidung des Operationsraums 10 und des Vorbereitungsraums 12 auch so ausgebildet sein, daß sie mit den hinter ihr liegenden Teilen der Kanäle der Klimaanlage baulich vereinigt ist, daß also die Kanalabschnitte in die Auskleidung der Wände und/oder der Decke baulich integriert sind. Auch die Luftaustritts- und Lufteintrittsöffnungen können baulich in die Auskleidung integriert sein.

Fig. 5 zeigt eine teilweise geschnittene, perspektivische Darstellung des Rotors 162 des Wärmetauschers 74 (Fig. 1 bis 3). Der Rotor besteht aus anorganischem, nichtmetallischem Material, das eine Vielzahl von Wellen und hierdurch gebildeten Durchtrittskanälen 164 aufweist und das mit Lithiumchlorid beschichtet ist. Die Fortluft strömt vom Kanalabschnitt 128 durch die Kanäle 164 zum Kanalabschnitt 130, erwärmt dabei den Rotor 162 und gibt an das Lithiumchlorid einen großen Teil ihrer Feuchte ab. Bei der Weiterdrehung des Rotors 162 im Sinne des Pfeiles 166 werden die Kanäle 164 von der Zuluft durchströmt, die vom Kanalabschnitt 62 durch den Rotor 162 zum Kanalabschnitt 76 strömt. Der Rotor 162 gibt dann die Wärme und Feuchtigkeit an die Zuluft ab. Als besondere Maßnahme zur Verhinderung einer Keimübertragung zwischen Abluft und Zuluft ist eine Schleuszone 168 vorgesehen, in der ein geringer Anteil der durch den Rotor 162 hindurchgetretenen Zuluft aufgefangen, in die entgegengesetzte Richtung umgelenkt, wieder durch den Rotor 162 hindurchgeführt und dem Abluftstrom zugemischt wird. Hierdurch wird vollständig vermieden, daß Abluft in den Zuluftstrom gelangt. Außerdem wird eine Selbstreinigung des Rotors von Verunreinigungen erzielt. Auf dem von Lithiumchlorid gebildeten Oberflächenbelag der Speichermasse kann sich, wie Versuche gezeigt haben, kein Nährboden für die Fortpflanzung von Bakterien entwickeln.

Die beschriebene Ausbildung des Wärmetauschers 74 ist an sich für Klimaanlagen bekannt, bietet jedoch im vorliegenden Anwendungsfall besondere Vorteile. Abweichend von dem beschriebenen Ausführungsbeispiel kann allerdings auch auf die erläuterte Schleuszone 168 verzichtet werden, da bereits durch die sonstige Ausbildung der Klimaanlage 16, wie oben erläutert, eine hochgradige Reinheit erreicht wird. Wird auf die Schleuszone 168 verzichtet, so wird man sowohl die Schwebstoffilter 64 als auch das Filter 86 als Hochleistungs-Schwebstoffilter der Klasse S ausbilden.

Fig. 6 zeigt das in den Zuluftkanal 34 eingeschaltete Durchflußmeßgerät 102 genauer. Es weist einen aus einem gezogenen Sechseckwabenprofil gebildeten Gleichrichter 170 auf, den die Zuluft mit einem praktisch völlig gleichmäßigen Geschwindigkeitsprofil in laminarer, ausschließlich axial gerichteter Strömung verläßt.

Hinter dem Gleichrichter 170 sind zwei Meßdüsen 172 für den statischen Druck nahe dem Außenumfang angeordnet, die untereinander in nicht näher dargestellter Weise verbunden sind. Weiter sind zur Messung des Gesamtdrucks eine Vielzahl von miteinander verbundenen Meßdüsen 174 vorgesehen, die über den gesamten Querschnitt verteilt sind. Durch Differenzbildung zwischen statischem Druck und Gesamtdruck läßt sich der Durchfluß äußerst genau bestimmen. Dies ist sowohl bei der Klimatisierung der Räume 10, 12 als auch während des Desinfektionsvorganges von Wichtigkeit.

Weitere, nicht beschriebene Ausgestaltungen sowie Abwandlungen gegenüber dem vorstehend beschriebenen Ausführungsbeispiel sind selbstverständlich möglich. Beispielsweise kann, um eine starke Erwärmung der Zuluft während des Einbringens des Desinfektionsmittels über sonst beim Klimatisieren erforderliche Temperaturen hinaus zu ermöglichen, vorgesehen sein, daß beide Nacherhitzer 82, 84 gleichzeitig einschaltbar sind. Bei Verwendung eines Desinfektionsmittels, das durch Spülung mit Frischluft ausgeblasen werden kann, kann das Gerät 92 entfallen, während dann andererseits zweckmäßig ein Außenluft ansaugendes Gebläse vorgesehen ist, das es gestattet, der Fortluft vor dem Ausblasen in die Umgebung Frischluft beizumischen, um die Konzentration des Desinfektionsmittels in der austretenden Fortluft herabzusetzen.

### Patentansprüche

1. Verfahren zum Desinfizieren des mittels einer Klimaanlage (16) klimatisierbaren Operationsraumes (10) sowie ggf. mindestens eines weiteren mittels derselben Klimaanlage (16) klimatisierbaren Raumes (12) eines Krankenhauses, wobei die Klimaanlage (16) mit der Umgebungsluft über je einen Außenluft- und Fortluftkanal (30, 32) sowie mit dem Operationsraum (10) und ggf. dem weiteren Raum (12) über einen Zuluft- und Abluftkanal (34, 28) in Verbindung steht, in den Zuluftkanal (34) ein Ventilator (60), saugseitig ein Vorfilter (62) und druckseitig ein weiteres Filter (86) eingeschaltet sind, in den Abluftkanal (28) ein Ventilator (132) eingeschaltet ist und der Außenluftkanal (30) und vorzugsweise auch der Fortluftkanal (32) zur Umgebung hin mittels einer Absperrvorrichtung (56, 140) luftdicht abschließbar sind und wobei die Klimaanlage (16) im geschlossenen Kreislauf mit den zu desinfizierenden Räumen (10, 12) betrieben und das Desinfektionsmittel in den Zuluftkanal (34) stromab des weiteren Filters (86) eingebracht wird, dadurch gekennzeichnet, daß beim Desinfizieren der druckseitige Abschnitt (134) des Abluftkanals (28) mit einer stromauf des Vorfilters (62) liegenden Stelle (58) des Zuluftkanals (34) verbunden wird und mittels der Klimaanlage (16) die für die Wirkung des Desinfektionsmittels günstigsten Temperatur- und Feuchtebedingungen in den zu desinfizierenden Räumen (10, 12) aufrechterhalten werden.

2. Verfahren nach Anspruch 1, dadurch gekennzeichnet, daß ein oberflächenaktives Desinfektionsmittel verwendet wird.

3. Verfahren nach Anspruch 1 oder 2, dadurch gekennzeichnet, daß als Desinfektionsmittel ein Aldehyd verwendet wird.

4. Verfahren nach Anspruch 2 und 3, dadurch gekennzeichnet, daß Formaldehyd verwendet wird.

5. Verfahren nach Anspruch 1, dadurch gekennzeichnet, daß als Desinfektionsmittel Triäthylenglykol verwendet wird.

6. Verfahren nach einem der vorangehenden Ansprüche, dadurch gekennzeichnet, daß das Desinfektionsmittel in dampfförmigem Zustand eingebracht wird.

7. Verfahren nach einem der Ansprüche 1 bis 5, dadurch gekennzeichnet, daß das Desinfektionsmittel in vernebelter Form eingebracht wird.

8. Verfahren nach einem der vorangehenden Ansprüche, dadurch gekennzeichnet, daß während des Einbringens des Desinfektionsmittels zusätzlich ein Lösungsmittel für dieses eingebracht wird.

9. Verfahren nach Anspruch 8, dadurch gekennzeichnet, daß eine wäßrige Lösung des Desinfektionsmittels eingebracht wird.

10. Verfahren nach Anspruch 4 und 9, dadurch gekennzeichnet, daß Formalin verdampft und eingebracht wird.

11. Verfahren nach einem der Ansprüche 8 bis 10, dadurch gekennzeichnet, daß während des Einbringens des Desinfektionsmittels die relative Feuchte der Zuluft über 85% und vorzugsweise zwischen 90% und 95% gehalten wird.

12. Verfahren nach einem der vorangehenden Ansprüche, dadurch gekennzeichnet, daß das Desinfektionsmittel bis zum Erreichen der erforderlichen Konzentration in den zu desinfizierenden Räumen (10, 12) in einer Zeitdauer eingebracht wird, die gering gegenüber der erforderlichen Einwirkzeit des Desinfektionsmittels ist.

13. Verfahren nach Anspruch 4, dadurch gekennzeichnet, daß während der Einwirkzeit die relative Feuchte in den zu desinfizierenden Räumen (10, 12) über 75% und vorzugsweise zwischen 80% und 90% gehalten wird.

14. Verfahren nach Anspruch 4 oder nach Anspruch 4 und einem der Ansprüche 6 bis 13, dadurch gekennzeichnet, daß das Formaldehyd bis zum Erreichen einer Konzentration von annähernd 5 g je m³ Rauminhalt der zu desinfizierenden Räume (10, 12) und Luftkanäle (28, 32, 34) der Klimaanlage (16) eingebracht wird.

15. Verfahren nach Anspruch 4 oder nach Anspruch 4 und einem der Ansprüche 6 bis 14, dadurch gekennzeichnet, daß die Einwirkdauer annähernd 6 h beträgt.

16. Verfahren nach Anspruch 5 oder nach Anspruch 5 und einem der Ansprüche 6 bis 9 oder 12, dadurch gekennzeichnet, daß das Triäthylenglykol bis zum Erreichen einer Konzentration von annähernd 6,7 mg je m³ Rauminhalt der zu desinfizierenden Räume (10, 12) und Luftkanäle (28, 32, 34) der Klimaanlage (16) eingebracht wird.

17. Verfahren nach Anspruch 5 oder nach Anspruch 5 und einem der Ansprüche 6 bis 9, 12 oder 16, dadurch gekennzeichnet, daß die Einwirkzeit annähernd 1 h beträgt.

18. Verfahren nach einem der vorangehenden Ansprüche, dadurch gekennzeichnet, daß während zumindest des anfänglichen und überwiegenden Teils der Dauer des Einbringens des Desinfektionsmittels das durch das Einbringen erzeugte Gasgemisch, ggf. durch Erhitzen stromauf der Stelle (bei Gerät 90), an der das Desinfektionsmittel eingebracht wird, auf einer über dem Taupunkt liegenden Temperatur gehalten wird.

19. Verfahren nach Anspruch 18, dadurch gekennzeichnet, daß die Raumluft während des Einbringens des Desinfektionsmittels auf mindestens 26°C und vorzugsweise 28°C bis 31°C erwärmt wird.

20. Verfahren nach einem der vorangehenden Ansprüche, dadurch gekennzeichnet, daß vor dem Einbringen des Desinfektionsmittels die zu desinfizierenden Räume (10, 12), ggf. durch Kühlen mittels der Klimaanlage (16), auf eine Temperatur gebracht werden, die niedriger ist als der Taupunkt des während des Einbringens des Desinfektionsmittels und zumindest des anfänglichen Abschnitts der Einwirkdauer aus der Klimaanlage (16) in die zu desinfizierenden Räume (10, 12) strömenden Gasgemischs.

21. Verfahren nach Anspruch 20, dadurch gekennzeichnet, daß während eines anfänglichen Abschnitts der Einwirkdauer und vorzugsweise auch während des Einbringens des Desinfektionsmittels die Raumfeuchte durch Regelung in Abhängigkeit von der gemessenen Temperatur der Innenflächen der zu desinfizierenden Räume (10, 12) geringfügig höher als derjenige Feuchtewert gehalten wird, bei dem bei der jeweiligen gemessenen Temperatur der Taupunkt unterschritten wird, wobei jedoch vorzugsweise der für die Wirksamkeit des Desinfektionsmittels günstigste Feuchtewert nicht unterschritten wird und wobei vorzugsweise diese Regelung in Abhängigkeit von der Temperatur der Innenflächen beendet wird, sobald eine vorgegebene Menge des Desinfektionsmittels je Flächeneinheit der Rauminnenfläche kondensiert ist.

22. Verfahren nach Anspruch 20 oder 21, dadurch gekennzeichnet, daß das Innere mindestens eines in den zu desinfizierenden Räumen (10, 12) vorhandenen, korrosionsanfällige Teile enthaltenden Geräts (176) auf einer über dem Taupunkt liegenden Temperatur gehalten wird, vorzugsweise mittels dem Zuluftkanal (34) der Klimaanlage (16) entnommener, entfeuchteter und erwärmter Luft, wobei insbesondere die Entnahme stromauf eines in dem Zuluftkanal (34) liegenden Filters (116) erfolgt.

23. Verfahren nach einem der vorangehenden Ansprüche, dadurch gekennzeichnet, daß während der Einwirkzeit die Konzentration des Desinfektionsmittels in den zu desinfizierenden Räumen (10, 12) und/oder in Luftkanälen (28, 32, 34) der Klimaanlage (16) gemessen und ggf. durch Zufuhr weiteren Desinfektionsmittels zumindest annähernd auf dem für die Wirksamkeit des Desinfektionsmittels günstigsten Wert gehalten wird.

24. Verfahren nach einem der vorangehenden Ansprüche, dadurch gekennzeichnet, daß während des Einbringens des Desinfektionsmittels und während dessen Einwirkdauer ein Überdruck gegenüber dem Umgebungsluftdruck in den zu desinfizierenden Räumen (10, 12) aufrechterhalten wird.

25. Verfahren nach einem der Ansprüche 1 bis 23, dadurch gekennzeichnet, daß während des Einbringens des Desinfektionsmittels und während dessen Einwirkdauer ein gegenüber dem Umgebungsluftdruck höchstens gleich großer Druck, vorzugsweise ein gegenüber dem Umgebungsluftdruck geringerer Druck, in den zu desinfizierenden Räumen (10, 12) aufrechterhalten wird.

26. Verfahren nach einem der Ansprüche 1 bis 23, dadurch gekennzeichnet, daß während der Einwirkzeit des Desinfektionsmittels abwechselnd ein Überdruck und ein Unterdruck gegenüber dem Umgebungsluftdruck in den zu desinfizierenden Räumen (10, 12) erzeugt wird, wobei vorzugsweise die Zyklusdauer einer Überdruckphase und einer darauffolgenden Unterdruckphase mehrfach kleiner als die Einwirkzeit ist und wobei vorzugsweise am Ende der Einwirkzeit eine Unterdruckphase liegt.

27. Verfahren nach einem der vorangehenden Ansprüche, dadurch gekennzeichnet, daß nach Ablauf der Einwirkzeit des Desinfektionsmittels dieses durch Frischluftzufuhr ausgeblasen wird.

28. Verfahren nach Anspruch 27, dadurch gekennzeichnet, daß die Frischluftzufuhr mit geringen Werten beginnend derart gesteigert wird, daß die je Zeiteinheit an die Umgebung abgegebene Menge oder die Konzentration des Desinfektionsmittels in der Fortluft zumindest anfänglich annähernd konstant auf einem geringen Wert bleibt.

29. Verfahren nach einem der vorangehenden Ansprüche, dadurch gekennzeichnet, daß nach Ablauf der Einwirkzeit des Desinfektionsmittels dieses zumindest teilweise physikalisch absorbiert, vorzugsweise ausgewaschen wird.

30. Verfahren nach einem der vorangehenden Ansprüche, dadurch gekennzeichnet, daß nach Ablauf der Einwirkzeit des Desinfektionsmittels dieses zumindest teilweise chemisch neutralisiert wird, wobei vorzugsweise das Neutralisierungsmittel gasförmig oder in vernebelter Form eingebracht wird.

31. Verfahren nach Anspruch 30, dadurch gekennzeichnet, daß das Neutralisierungsmittel in einen Luftkanal (34) der Klimaanlage (16) eingebracht wird, vorzugsweise an derselben Stelle (bei Gerät 90) wie das Desinfektionsmittel.

32. Verfahren nach Anspruch 30 oder 31, dadurch gekennzeichnet, daß das Neutralisierungsmittel in gegenüber der eingebrachten Menge des Desinfektionsmittels überschüssiger Menge eingebracht wird.

33. Verfahren nach einem der Ansprüche 30 bis 32, dadurch gekennzeichnet, daß während der Einwirkdauer des Neutralisierungsmittels der Gasdruck in den desinfizierten Räumen (10, 12) gegenüber dem darin während der Einwirkdauer des Desinfektionsmittels aufrechterhaltenen Gasdruck erhöht wird.

34. Verfahren nach einem der Ansprüche 30 bis 32, dadurch gekennzeichnet, daß während des Entfernens des Desinfektionsmittels nach Ablauf der Einwirkzeit in den desinfizierten Räumen (10, 12) abwechselnd ein Überdruck und ein Unterdruck gegenüber dem Umgebungsluftdruck erzeugt wird.

35. Verfahren nach einem der Ansprüche 29 bis 34, dadurch gekennzeichnet, daß nach dem zumindest teilweisen Entfernen des Desinfektionsmittels dessen Rest durch Spülen mit Frischluft ausgeblasen wird.

36. Verfahren nach einem der vorangehenden Ansprüche, dadurch gekennzeichnet, daß nach Ablauf der Einwirkdauer des Desinfektionsmittels das den desinfizierten Räumen (10, 12) zugeführte Gasgemisch erwärmt wird.

37. Einrichtung zur Durchführung des Verfahrens nach Anspruch 1 mit einer Klimaanlage (16), die mit der Umgebungsluft über je einen Außenluft- und Fortluftkanal (30, 32) sowie mit dem Operationsraum (10) und ggf. mindestens einem weiteren Raum (12) über einen Zuluft- und einen Abluftkanal (34, 28) in Verbindung steht, wobei in den Zuluftkanal (34) ein Ventilator (60), ein Nachwärmer (82, 84), ein Kühler (78), eine Befeuchtungsvorrichtung (94), saugseitig ein Vorfilter (62) und druckseitig ein weiteres Filter (86) eingeschaltet sind, in den Abluftkanal (28) ein Ventilator (132) eingeschaltet ist, der Außenluftkanal (30) und vorzugsweise auch der Fortluftkanal (32) zur Umgebung hin mittels einer Absperrvorrichtung (56, 140) luftdicht abschließbar sind und im Zuluftkanal (34) stromab des weiteren Filters (86) ein Desinfektionsmittel einbringbar ist, dadurch gekennzeichnet, daß zwischen dem druckseitigen Abschnitt (134) des Abluftkanals (28) und einer im Zuluftkanal (34) zwischen der Absperrvorrichtung (56) des Außenluftkanals (30) und dem Vorfilter (62) gebildeten Mischkammer (58) ein mittels einer weiteren Absperrvorrichtung (146) luftdicht absperrbarer Beipaß (142) liegt.

38. Einrichtung nach Anspruch 37, dadurch gekennzeichnet, daß die Klimaanlage (16) während des Desinfektionsvorgangs programmsteuerbar ist.

39. Einrichtung nach Anspruch 37 oder 38, dadurch gekennzeichnet, daß das druckseitige weitere Filter (86) zumindest ein Feinstfilter und vorzugsweise ein Schwebstoffilter, insbesondere ein Hochleistungs-Schwebstoffilter ist.

40. Einrichtung nach einem der Ansprüche 37 bis 39, dadurch gekennzeichnet, daß an den Öffnungen (114) des Zuluftkanals (34) Hochleistungs-Schwebstoffilter (116) vorgesehen sind.

41. Einrichtung nach einem der Ansprüche 37 bis 40, dadurch gekennzeichnet, daß an den Öffnungen (118, 120, 122) des Abluftkanals (28) Hochleistungs-Schwebstoffilter (124) vorgesehen sind.

42. Einrichtung nach einem der Ansprüche 37 bis 41, dadurch gekennzeichnet, daß saugseitig im Zuluftkanal (34) ein Schwebstoffilter (64), vorzugsweise ein Hochleistungs-Schwebstoffilter, vorgesehen ist.

43. Einrichtung nach einem der Ansprüche 37 bis 42, dadurch gekennzeichnet, daß die zu desinfizierenden Räume (10, 12) luftdicht ausgekleidet sind, wobei vorzugsweise die Auskleidung (24) gut wärmeleitend und von großer Wärmekapazität ist.

44. Einrichtung nach Anspruch 43, dadurch gekennzeichnet, daß die innere Oberfläche der Auskleidung (24) aus rostfreien Blechen (154), vorzugsweise mit mattierter Oberfläche, besteht, wobei diese vorzugsweise mit hinter ihnen liegenden weiteren Blechen (156) und einer Füllmasse formsteife Platten (153) bilden, die an ihren einander benachbarten Rändern mittels Dichtungen (160) abgedichtet sind, und wobei vorzugsweise die Dicke der rostfreien Bleche (154) annähernd 1 mm oder mehr beträgt.

45. Einrichtung nach Anspruch 43 oder 44 dadurch gekennzeichnet, daß zwischen Zuluftkanal (34) und Abluftkanal (28) ein vorzugsweise regenerativ wirkender Wärmetauscher (74), vorzugsweise ein Wärmetauscher mit rotierender Speichermasse (162), eingeschaltet ist.

46. Einrichtung nach einem der Ansprüche 37 bis 40, dadurch gekennzeichnet, daß in mindestens einen Luftkanal (34) der Klimaanlage (16) ein einen Gleichrichter (170) umfassendes Durchfluß-Meßgerät (102) eingeschaltet ist, wobei vorzugsweise der Gleichrichter (170) aus einem gezogenen Sechseckwabenprofil gebildet ist.

## Revendications

1. Procédé de désinfection de la salle d'opérations (10) d'un hôpital, climatisable au moyen d'une installation de climatisation (16), et éventuellement d'au moins un autre local (12) climatisable au moyen de la même installation de climatisation (16), procédé dans lequel:
— l'installation de climatisation (16) est en communication avec l'air ambiant par un conduit d'air extérieur (30) et par un conduit d'air expulsé (32) ainsi qu'avec la salle d'opérations (10) et éventuellement avec l'autre local (12) par un conduit d'arrivée d'air (34) et par un conduit de départ d'air (28),
— un ventilateur (60), un filtre primaire (62) du côté aspiration, et un filtre secondaire (86) du côté compression sont insérés dans le conduit d'arrivée d'air (34),
— un ventilateur (132) est inséré dans le conduit de de départ d'air (28),
— le conduit d'air extérieur (30) et également, de préférence, le conduit d'air expulsé (32) peuvent être obturés, de façon étanche à l'air, par rapport à l'environnement, au moyen d'un dispositif obturateur (56, 140), et
— l'installation de climatisation (16) fonctionne en circuit fermé avec les locaux à désinfecter (10, 12), le désinfectant étant introduit dans le conduit d'arrivée d'air (34) en aval du filtre secondaire (86), caractérisé en ce que, pendant la désinfection, la portion (134) du conduit de départ d'air (28), placée du côté pression, est reliée à un point (58) du conduit d'arrivée d'air (34) situé en amont du filtre primaire (62), et en ce que la température et les conditions d'humidité les plus favorables à l'action du désinfectant sont maintenues dans les locaux à désinfecter (10, 12) au moyen de l'installation de climatisation (16).

2. Procédé selon la revendication 1, caractérisé en ce qu'il utilise un désinfectant tensioactif.

3. Procédé selon la revendication 1 ou 2, caractérisé en ce que le désinfectant utilisé est un aldéhyde.

4. Procédé selon les revendications 2 et 3, caractérisé en ce qu'il utilise le formaldéhyde.

5. Procédé selon la revendication 1, caractérisé en ce qu'il utilise comme désinfectant le triéthylène-glycol.

6. Procédé selon une quelconque des Revendications précédentes, caractérisé en ce que le désinfectant est introduit à l'état de vapeur.

7. Procédé selon une quelconque des Revendications 1 à 5, caractérisé en ce que le désinfectant est introduit sous forme nébulisée.

8. Procédé selon une quelconque des Revendications précédentes, caractérisé en ce que, pendant l'introduction du désinfectant, il est introduit additionnellement un solvant dudit désinfectant.

9. Procédé selon la Revendication 8, caractérisé en ce qu'il est introduit une solution aqueuse du désinfectant.

10. Procédé selon les Revendications 4 et 9, caractérisé en ce qu'il est introduit de la formaline vaporisée.

11. Procédé selon une quelconque des Revendications 8 à 10, caractérisé en ce que, pendant l'introduction du désinfectant, l'humidité relative de l'air amené est maintenue au dessus de 85% et, de préférence, entre 90% et 95%.

12. Procédé selon une quelconque des Revendications précédentes, caractérisé en ce que, jusqu'à obtention de la concentration nécessaire, le désinfectant est introduit dans les locaux à désinfecter (10, 12) en un laps de temps réduit par rapport au temps nécessaire à l'action du désinfectant.

13. Procédé selon la Revendication 4, caractérisé en ce que, pendant le temps d'action, l'humidité relative dans les locaux à désinfecter (10, 12) est maintenue au dessus de 75% et, de préférence, entre 8% et 90%.

14. Procédé selon la Revendication 4, ou selon la Revendication 4 et une quelconque des Revendications 6 à 13, caractérisé en ce que le formaldéhyde est introduit jusqu'à obtention d'une concentration d'environ 5 grammes par mètre cube de volume des locaux à désinfecter (10, 12) et des conduits d'air (28, 32, 34) de l'installation de climatisation (16).

15. Procédé selon la Revendication 4, ou selon la Revendication 4 et une quelconque des Revendications 6 à 14, caractérisé en ce que le temps d'action est d'environ six heures.

16. Procédé selon la Revendication 5, ou selon la Revendication 5 et une quelconque des Revendications 6 à 9 ou 12, caractérisé en ce que le triéthylène-glycol est introduit jusqu'à obtention d'une concentration d'environ 6,7 milligrammes par mètre cube des locaux à désinfecter (10, 12) et des conduits d'air (28, 32, 34) de l'installation de climatisation (16).

17. Procédé selon la Revendication 5, ou selon la Revendication 5 et une quelconque des Revendications 6 à 9, 12 ou 16, caractérisé en ce que le temps d'action est d'environ une heure.

18. Procédé selon une quelconque des Revendications précédentes, caractérisé en ce que, pendant au moins la fraction initiale et principale de la durée de l'introduction du désinfectant, le mélange gazeux engendré par cette introduction est maintenu à une température supérieure au point de rosée, éventuellement par chauffage en amont du point (appareil 90) d'introduction du désinfectant.

19. Procédé selon la Revendication 18, caractérisé en ce que, pendant l'introduction du désinfectant, l'air des locaux est échauffé jusqu'à au moins 26°C et, de préférence, jusqu'à une température comprise entre 28°C et 31°C.

20. Procédé selon une quelconque des Revendications précédentes, caractérisé en ce qu'avant l'introduction du désinfectant, les locaux à désinfecter (10, 12) sont amenés, éventuellement par refroidissement au moyen de l'installation de climatisation (16), à une température inférieure au point de rosée du mélange gazeux passant de l'installation de climatisation (16) aux locaux à désinfecter (10, 12) pendant l'introduction du désinfectant et au moins la fraction initiale du temps d'action.

21. Procédé selon la Revendication 20, caractérisé en ce que, pendant une fraction initiale du temps d'action, et de préférence également pendant l'introduction du désinfectant, l'humidité des locaux est maintenue, par réglage dépendant de la température mesurée des surfaces internes des locaux à désinfecter (10, 12), à un taux très légèrement supérieur au taux d'humidité auquel le point de rosée est dépassé en baisse pour la température mesurée, mais de préférence sans s'abaisser en dessous du taux d'humidité le plus favorable pour l'efficacité du désinfectant, et de préférence en interrompant ledit réglage dépendant de la température des surfaces internes dès qu'une quantité prédéterminée de désinfectant est condensée par unité de surface des surfaces internes des locaux.

22. Procédé selon une quelconque des Revendications 20 ou 21, caractérisé en ce que l'intérieur d'au moins un des appareils (176) renfermant des pièces corrodables, placés dans les locaux à désinfecter (10, 12), est maintenu à une température supérieure au point de rosée, de préférence au moyen d'air asséché et échauffé, prélevé dans le conduit d'arrivée d'air (34) de l'installation de climatisation (16), ce prélèvement s'effectuant en particulier en amont d'un filtre (116) placé dans ledit conduit d'arrivée d'air (34).

23. Procédé selon une quelconque des Revendications précédentes, caractérisé en ce que, pendant le temps d'action, la concentration du désinfectant dans les locaux à désinfecter (10, 12) et/ou dans les conduits d'air (28, 32, 34) de l'installation de climatisation (16) est mesurée et maintenue, éventuellement par addition d'un supplément de désinfectant, à au moins une valeur approchée de la valeur la plus favorable à l'efficacité du désinfectant.

24. Procédé selon une quelconque des Revendications précédentes, caractérisé en ce que, pendant l'introduction du désinfectant et pendant son temps d'action, on maintient, dans les locaux à désinfecter (10, 12) une surpression par rapport à la pression atmosphérique environnante.

25. Procédé selon une quelconque des Revendications 1 à 23, caractérisé en ce que, pendant l'introduction du désinfectant et pendant son temps d'action, on maintient, dans les locaux à désinfecter, une pression au plus égale à la pression atmosphérique environnante et, de préférence, une pression inférieure à la pression atmosphérique environnante.

26. Procédé selon une quelconque des Revendications 1 à 23, caractérisé en ce que, pendant le temps d'action du désinfectant, on engendre, dans les locaux à désinfecter, alternativement une surpression et une dépression par rapport à la pression atmosphérique environnante, la durée du cycle d'une phase de surpression et de la phase de dépression suivante étant, de préférence, un sous-multiple du temps d'action, et une phase de dépression terminant, de préférence, ledit temps d'action.

27. Procédé selon une quelconque des Revendications précédentes, caractérisé en ce qu'après expiration du temps d'action du désinfectant, ce dernier est chassé par insufflation d'air frais.

28. Procédé selon la Revendication 27, caractérisé en ce que la quantité d'air frais ajouté, faible au début, croît ensuite de façon que la quantité d'air cédé à l'environnement par unité de temps ou la concentration de désinfectant dans l'air expulsé soient maintenues presque constamment, au moins au début, à une valeur faible.

29. Procédé selon une quelconque des Revendications précédentes, caractérisé en ce qu'après expiration du temps d'action du désinfectant, ce dernier est, au moins partiellement, physiquement absorbé ou éliminé par rinçage.

30. Procédé selon une quelconque des Revendications précédentes, caractérisé en ce qu'après expiration du temps d'action du désinfectant, ce dernier est, au moins partiellement, neutralisé chimiquement, le neutralisant étant, de préférence, introduit sous forme gazeuse ou nébulisée.

31. Procédé selon la Revendication 30, caractérisé en ce que le neutralisant est introduit dans un conduit d'air (34) de l'installation de climatisation (16) et de préférence au même endroit (à l'appareil 90) que le désinfectant.

32. Procédé selon une quelconque des Revendications 30 ou 31, caractérisé en ce que le neutralisant est introduit en quantité excédentaire par rapport à la quantité de désinfectant introduite.

33. Procédé selon une quelconque des Revendications 30 à 32, caractérisé en ce que, pendant le temps d'action du neutralisant, la pression gazeuse dans les locaux désinfectés (10, 12) est augmentée par rapport à celle qui y était maintenue pendant le temps d'action du désinfectant.

34. Procédé selon une quelconque des Revendications 30 à 32, caractérisé en ce que pendant l'élimination du désinfectant après expiration de son temps d'action, on engendre alternativement, dans les locaux désinfectés (10, 12), une surpression et une dépression par rapport à la pression atmosphérique environnante.

35. Procédé selon une quelconque des Revendications 29 à 34, caractérisée en ce qu'après élimination au moins partielle du désinfectant, son reliquat en est chassé par balayage avec de l'air frais.

36. Procédé selon une quelconque des Revendications précédentes, caractérisé en ce qu'après expiration du temps d'action du désinfectant, le mélange gazeux amené aux locaux désinfectés (10, 12) est échauffé.

37. Dispositif de mise en oeuvre du procédé selon la Revendication 1, comportant une installation de climatisation (16) communiquant avec l'air ambiant par un conduit d'air extérieur (30) et par un conduit d'air expulsé (32), ainsi qu'avec la salle d'opérations (10) et éventuellement au moins un autre local (12) par un conduit d'arrivée d'air (34) et un conduit de départ d'air (28), dispositif dans lequel sont insérés:

— dans le conduit d'arrivée d'air (34), un ventilateur (60), un échauffeur (82, 84), un refroidisseur (78), un dispositif humidificateur (94), un filtre primaire (62) du côté aspiration et un filtre secondaire (86) du côté compression,

— dans le conduit de départ d'air (28), un ventilateur (132), dans lequel le conduit d'air extérieur (30) et de préférence également le conduit d'air expulsé (32) peuvent être obturés, de façon étanche à l'air, par rapport à l'environnement, au moyen d'un dispositif obturateur (56, 140),

un désinfectant pouvant être introduit dans le conduit d'arrivée d'air (34) en aval du filtre secondaire (86),

caractérisé en ce qu'entre la portion (134) du conduit de départ d'air (28) placée du côté pression et une enceinte mélangeuse (58) formée dans le conduit d'arrivée d'air (34) entre le dispositif obturateur (56) du conduit d'air extérieur (30) et le filtre primaire 62, il est établi une dérivation (142) pouvant être obturée de façon étanche à l'air au moyen d'un second dispositif obturateur (146).

38. Dispositif selon la revendication 37, caractérisé en ce que, pendant le processus de désinfection, l'installation de climatisation peut être commandée de façon programmée.

39. Dispositif selon une quelconque des revendications 37 ou 38, caractérisé en ce que le filtre secondaire (86) du côté compression est au moins un filtre extra-fin et de préférence un filtre pour matières en suspension, en particulier à grand rendement.

40. Dispositif selon une quelconque des Revendications 37 à 39, caractérisé en ce que des filtres à grand rendement pour matières en suspension sont installés aux orifices (114) du conduit d'arrivée d'air (34).

41. Dispositif selon une quelconque des Revendications 37 à 40, caractérisé en ce que des filtres à grand rendement pour matières en suspension sont installés aux orifices (118, 120, 122) du conduit de départ d'air (28).

42. Dispositif selon une quelconque des Revendications 37 à 41, caractérisé en ce qu'un filtre pour matières en suspension, de préférence à grand rendement, est installé dans le conduit d'arrivée d'air (34) du côté aspiration.

43. Dispositif selon une quelconque des Revendications 37 à 42, caractérisé en ce que les locaux à désinfecter (10, 12) sont garnis d'un revêtement étanche à l'air, ledit revêtement (24) ayant de préférence une bonne conductibilité et une grande capacité thermiques.

44. Dispositif selon la Revendication 43, caractérisé en ce que la surface interne du revêtement (24) est faite de tôles métalliques inoxydables (154), de préférence à surface dépolie, formant de préférence, avec d'autres tôles (156) placées derrière elles at avec une masse de remplissage, des plaques rigides dont les bords respectivement contigus sont jointoyés par des joints étanches (160), l'épaisseur des tôles inoxydables (154) étant de préférence d'environ 1 mm ou plus.

45. Dispositif selon une quelconque des Revendications 43 ou 44, caractérisé en ce qu'entre le conduit d'arrivée d'air (34) et le conduit de départ d'air (28), il est inséré un éxchangeur de chaleur (74) agissant de préférence par régénération, et mieux encore un échangeur de chaleur à masse accumulatrice rotative (162).

46. Dispositif selon une quelconque des Revendications 37 à 40, caractérisé en ce qu'au moins dans un conduit d'arrivée d'air (34) de l'installation de climatisation (16), il est inséré un débitmètre (102) comportant un redresseur (170), ce dernier étant constitué, de préférence, par un profilé en nid d'abeille hexagonal étiré.

## Claims

1. Method of disinfecting an air-conditioned operation room of a hospital (10), and if required at least one further air-conditioned room (12), by means of an air-conditioning plant (16), whereby the air-conditioning plant (16) is connected to the outside by means of air-inlet and air-outlet ducts (30, 32) and also to the operation room (10), and if required to the further room (12), by means of supply-air and exhaust-air ducts (34, 28), the supply-air duct (34) containing a fan (60), a pre-filter (62) upstream of the fan and a further filter (86) downstream of the fan, a fan (132) being arranged in the exhaust-air duct (28), the air-inlet duct (30) and preferably the air-outlet duct (32) also being sealably connectable to the outside by means of a locking device (56, 140), the air-conditioning plant (16) being connected in a closed circuit with the rooms (10, 12) being disinfected, and the disinfecting means being introduced in the supply-air duct (34) downstream of the further filter (86), characterised in that during disinfecting the downstream section (134) of the exhaust-air duct (28) is connected to a portion (58) of the supply-air duct (34) lying upstream of the pre-filter (62), and by means of the air-conditioning plant (16) the suitable temperature and humidity for operation of the disinfecting means is maintained in the rooms (10, 12) being disinfected.

2. Method according to claim 1 characterised in that a surface-active disinfecting means is used.

3. Method according to claim 1 or 2, characterised in that the disinfecting means is an aldehyde.

4. Method according to claim 2 or 3, characterised in that formaldehyde is used.

5. Method according to claim 1, characterised in that the disinfecting means is triethylene glycol.

6. Method according to any one of the preceding claims, characterised in that the disinfecting means is introduced in a vaporous condition.

7. Method according to any one of claims 1 to 5, characterised in that the disinfecting means is introduced in an atomised form.

8. Method according to any one of the preceding claims, characterised in that during the introduction of the disinfecting means, a solvent therefor is also introduced.

9. Method according to claim 8, characterised in that an aqueous solution of the disinfecting means is introduced.

10. Method according to claims 4 and 9, characterised in that vaporised formalin is introduced.

11. Method according to any one of claims 8 to 10, characterised in that during the introduction of the disinfecting means, the relative humidity of the supply-air is maintained above 85% preferably between 90% and 95%.

12. Method according to any one of the preceding claims, characterised in that in order that the disinfecting means is at the necessary concentration in the rooms (10, 12) to be disinfected, it is introduced in a period of time which is small relative to the time necessary for the disinfecting means to operate.

13. Method according to claim 4, characterised in that during disinfecting the relative humidity in the rooms (10, 12) being disinfected is maintained above 75%, preferably between 80% and 90%.

14. Method according to claim 4, or claim 4 and any one of claims 6 to 13, characterised in that the formaldehyde is introduced so as to produce a concentration of approximately 5g per $m^3$ in the rooms (10, 12) being disinfected and the air-conditioning plant (16).

15. Method according to claim 4, or claim 4 and any one of claims 6 to 14, characterised in that the disinfecting time is substantially 6 hours.

16. Method according to claim 5, or claim 5 and any one of claims 6 to 9 or 12, characterised in that the triethylene glycol is introduced so as to produce a concentration of approximately 6.7 mg per $m^3$ in the rooms (10, 12) being disinfected and the air ducts (28, 32, 34) of the air-conditioning plant (16).

17. Method according to claim 5, or claim 5 and any one of claims 6 to 9, 12 or 16, characterised in that the disinfecting time is substantially 1 hour.

18. Method according to any one of the preceding claims, characterised in that during at least the initial and major part of the period during which the disinfecting means is introduced the resulting gas mixture is maintained at a temperature above the dew point, if necessary by heating upstream of the place (device 90) at which the disinfecting means is introduced.

19. Method according to claim 18, characterised in that during the introduction of the disinfecting means the room air is heated to at least 26°C and preferably 28°C to 31°C.

20. Method according to any one of the preceding claims, characterised in that before the disinfecting means is introduced, the rooms (10, 12) to be disinfected are brought to a temperature, if necessary by cooling using the air-conditioning plant (16), which is lower than the dew point of the gas mixture flowing from the air-conditioning plant (16) into the rooms (10, 12) during the introduction of the disinfecting means and during at least the initial period of disinfecting.

21. Method according to claim 20, characterised in that during an initial period of disinfecting, and preferably also during the introduction of the disinfecting means, the room humidity is maintained, as a function of the temperature measured at the inner surfaces of the rooms (10, 12) being disinfected, slightly higher than that value of the humidity at the dew point at the respective measured temperature, and preferably the value of the humidity does not fall below that suitable for the effective operation of the disinfecting means, and preferably the temperature-dependent humidity control of the inner surface ceases as soon as a pre-determined amount of disinfecting means per unit surface area of the inner surface has condensed.

22. Method according to claim 20 or 21, characterised in that the inside of at least one of the devices (176) present in the rooms (10, 12) being disinfected and containing corrodable parts is maintained at a temperature above the dew point, preferably by means of air removed from the supply-air duct (34) of the air conditioning plant (16) which air is dehumidified and heated, the removal, in particular, taking place upstream of a filter (116) arranged in the supply-air duct (34).

23. Method according to any one of the preceding claims, characterised in that during the disinfecting the concentration of the disinfecting means in the rooms (10, 12) being disinfected and/or in the air ducts (28, 32, 34) of the air-conditioning plant (16) is measured and if necessary is maintained at at least approximately the value suitable for effective operation of the disinfecting means by supply of further disinfecting means.

24. Method according to any one of the preceding claims, characterised in that during the introduction of the disinfecting means and during its period of operation, a pressure is maintained in the rooms (10, 12) being disinfected in excess of atmospheric pressure.

25. Method according to any one of claims 1 to 23, characterised in that during the introduction of the disinfecting means, and during its period of operation, a pressure is maintained in the rooms (10, 12) being disinfected no higher than atmospheric pressure, and preferably less than atmospheric pressure.

26. Method according to any one of claims 1 to 23, characterised in that during the period of operation of the disinfecting means an excess pressure and a reduced pressure relative to atmospheric pressure is produced alternately in the rooms (10, 12) being disinfected, and preferably the duration of an excess-pressure phase and a subsequent reduced-pressure phase is several times smaller than the disinfecting time, and preferably at the end of the disinfecting time there is a reduced-pressure phase.

27. Method according to any one of the preceding claims, characterised in that after the operation time of the disinfecting means, the latter is blown out by a fresh-air supply.

28. Method according to claim 27, characterised in that the fresh-air supply beginning at a low value increases in such a way that the amount expelled per unit time to the atmosphere or the concentration of the disinfecting means in the exhaust air is at least initially substantially constant and at a low value.

29. Method according to any one of the preceding claims, characterised in that at the end of the operational time of the disinfecting means, the latter is at least partially physically absorbed, preferably by washing.

30. Method according to any one of the preceding claims, characterised in that at the end of the operational time of the disinfecting means, the latter is at least partially chemically neutralised, and preferably the neutralising means is in a gaseous or atomised form.

31. Method according to claim 30, characterised in that the neutralising means is fed into an air duct (34) of the air-conditioning plant (16), preferably at the same place (device 90) as the disinfecting means.

32. Method according to claim 30 or 31, characterised in that the neutralising means is fed in excess of the disinfecting means supplied.

33. Method according to any one of claims 30 to 32, characterised in that during the period of operation of the neutralising means, the gas pressure in the rooms (10, 12) being disinfected is higher than the gas pressure maintained therein during the period of operation of the disinfecting means.

34. Method according to any one of claims 30 to 32, characterised in that during the removal of the disinfecting means after disinfecting of the rooms (10, 12), an alternate excess pressure and reduced pressure relative to the atmospheric pressure is produced.

35. Method according to any one of claims 29 to 34, characterised in that after at least a partial removal of the disinfecting means the remainder is expelled by a fresh-air flow.

36. Method according to any one of the preceding claims; characterised in that after expiry of the operation time of the disinfecting means the gas mixture supplied to the rooms (10, 12) being disinfected is heated.

37. Apparatus for carrying out the method according to claim 1 with an air-conditioning plant (16), which is connected to the atmosphere by means of a respective air-inlet and air-outlet duct (30, 32) and to the operation room (10), and if necessary to at least one further room (12), via a supply-air and an exhaust-air duct (34, 28), wherein a fan (60), a heater (82, 84), a cooler (78), a humidifier (94), an upstream pre-filter (62) and a downstream filter (86) are arranged in the supply-air duct (34), a fan (132) being arranged in the exhaust-air duct (28), the air-inlet duct (30) and preferably also the air-outlet duct (32) being sealingly closable to the atmosphere by means of a closing device (56, 140), and wherein disinfecting means may be introduced in the supply-air duct (34) downstream of the further filter (86), characterised in that a bypass (142), sealingly closable by means of a further closing device (146), is arranged between the pressurised portion (134) of the exhaust-air duct (28) and a mixing chamber (58) formed in the supply-air duct (34) between the closing device (56) of the air-inlet duct (30) and the pre-filter (62).

38. Apparatus according to claim 37, characterised in that the air-conditioning plant (16) is controllable during the disinfecting operation by means of a predetermined programme.

39. Apparatus according to claim 37 or 38, characterised in that the pressure-side filter (86) is at least a super-fine filter and preferably a mechanical filter, particularly a high-performance mechanical filter.

40. Apparatus according to any one of claims 37 to 39, characterised in that high-performance mechanical filters (116) are provided at the openings (114) of the supply-air duct (34).

41. Apparatus according to any one of claims 37 to 40, characterised in that high-performance mechanical filters (124) are arranged at the openings (118, 120, 122) of the exhaust-air duct (28).

42. Apparatus according to any one of claims 37 to 41, characterised in that a mechanical filter (64), preferably a high-performance mechanical filter, is arranged in the reduced-pressure portion of the supply-air duct (34).

43. Apparatus according to any one of claims 37 to 42, characterised in that the rooms (10, 12) being disinfected are provided with an airtight lining, and the lining (24) preferably has good heat-conducting properties and a large thermal capacity.

44. Apparatus according to claim 43, characterised in that the inner surface of the lining (24) is formed from rust-proof sheet metal (154) preferably with a mat surface, wherein these form rigid plates (153) preferably together with further metal sheets (156) lying therebehind and a filter, adjacent edges of the plates being sealed by means of seals (160), and preferably the thickness of the rust-proof sheet (154) is substantially 1mm or more.

45. Apparatus according to claim 43 or 44, characterised in that a heat exchanger (74) is arranged between the supply-air duct (34) and the exhaust-air duct (28), and is preferably of the regenerative type, preferably a heat exchanger with rotating storage mass (162).

46. Apparatus according to any one of claims 37 to 40, characterised in that a flow meter (102) containing a flow straightener (170) is arranged in at least one air duct (34) of the air-conditioning plant (16), and preferably the straightener (170) has a hexagonal-honeycomb structure.

FIG. 1

FIG. 2

FIG. 3

FIG. 4

FIG. 5

FIG. 6